# EUROPEAN PATENT APPLICATION

(11) **EP 0 823 570 A1**
(43) Date of publication of application: **11.02.1998**
(21) Application number: 96305744.3
(22) Date of filing: 05.08.1996
(51) Int. Cl.: F16H 47/08, F16H 3/72, F16H 3/74

(54) **Continuously variable transmission**

(71) Applicant: Choi, Tae-Soo, Seocho-gu, Seoul (KR); Moon, Byung-I1, Sungbuk-gu, Seoul (KR); Yoo, Wan-Moo, Koyang-City, Kyungki-do (KR)
(72) Inventor: Choi, Tae-Soo, Seocho-gu, Seoul (KR); Moon, Byung-I1, Sungbuk-gu, Seoul (KR); Yoo, Wan-Moo, Koyang-City, Kyungki-do (KR)
(74) Representative: Jenkins, Peter David

(57) **Abstract**

A continuously variable transmission having (A) a speed change controlling system for receiving rotational power generated by an engine and for controlling rotational ratio in accordance with the load of an output shaft and (B) a speed change system is disclosed. The speed change controlling system utilizes an input shaft (12) having a first, second and third section (12A, 12B, 12C) for receiving rotational input with a connecting shaft (34) rotatably and coaxially mounted on the second section (12B) of the input shaft (12) to enable independent rotation about the second section (12B). A control shaft (38) is rotatably and coaxially mounted on the connecting shaft (34) to enable independent rotation about the connecting shaft (34). A fixed shaft (62) is secured to prevent rotation and coaxially mounted on the control shaft (38). An impeller housing (42) having a first end 42A and a second end 42B, with the first end rotatably mounted on the first end of the connecting shaft 34A and the second end including an impeller (56) rotatably mounted on the fixed shaft (62) is used. A turbine (58) is positioned opposite the impeller (56) and is secured to the control shaft (38). A stator (60) is positioned between the impeller (56) and the turbine (58) with a one-way clutch (66), in use, preventing reverse rotation of the stator. A direct clutch plate (30) integrally formed between the first section (12A) and the second section (12B) of the input shaft 12 is used. A direct clutch (52) connects and disconnects the rotational input from the direct clutch plate (30) to the impeller housing (42). A one-way clutch (48) is operatively connected to impeller housing 42 and connecting shaft 34A to prevent the impeller housing (42) from rotating in a direction opposite to the rotational direction of the connecting shaft (34). A clutch connecting plate (82) is integrally formed on the control shaft (38). (B) A speed change system for varying rotational speed/changing rotational direction of the rotational output to the output shaft is combined with the speed change controlling system to result in the continuously variable transmission of the present invention.

## Description

The present invention relates to a continuously variable transmission, and more particularly, to a continuously variable transmission constructed in such a way that it can convert and transmit rotational power input to it to an output shaft with intervening speed-changes to provide a normal operation mode for a smooth and quiet ride, or a power mode for driving in a mountainous area, up an inclined road or for rapid starting, with all the gears being engaged and without the need for disengaging or changing gears when a change of speed is necessary to maintain or change the rate of speed of forward motion or when reversing rotational output to the output shaft to permit backward motion.

In all conventional manual transmissions, speed change is performed by careful operation and selection of a particular sequence depending on predetermined ratios with the annoyance of disengaging and changing gears at the time of speed change. Also, existing automatic transmissions and belt type continuously variable transmissions are complicated in structure, are expensive to manufacture and are not reliable, i.e., only used in a limited capacity due to wear, noise and slippage of the belt.

To solve the above described problems U.S. Pat. No. 5,415,597 entitled: Stepless Automatic Variable Transmission, issued on May 16, 1995. However, the present invention is constructed differently from that of the preceding patent. That is, in the U.S. Patent No. 5,415,597, the impeller is directly connected to an input shaft so that the rotational force of the input shaft is transmitted as it is. However, the present invention is different in that it can smoothly transmit the rotation and also provide a larger thrust force and better performance by using a method of transmitting the input to the impeller through a clutch and a method of transmitting increased rotational force or torque which is greater than that of the input rotational force by means of a reduction sun gear to the impeller.

Therefore, the objects of the present invention are to provide a continuously variable transmission which is not as structurally complicated as those of the prior art, to provide an assured speed change operation which quickly responds to the change of a load, and to provide smooth and quiet operation suitable for use in an automobile, and to provide greater thrust power and better all around performance.

To achieve the above described objects, the present invention includes a speed change system, which receives the rotational power generated by an engine, or the like, and speed-changes the rotational power and transmits it to the output shaft, and a speed change controlling system which automatically controls the rotation ratio according to the load condition of the output shaft, thereby steplessly speed changing the input rotational force from a minimum ratio to a predetermined ratio and transmitting it to the output shaft.

Summarizing the construction of the above described speed change system and speed change controlling system, the speed change system utilizes a known planetary gear device or differential gear device and is mainly characterized in that it consists of an input sun gear which receives the power generated by the engine, a first planetary gear (or a first differential gear) meshed with the input sun gear, a second planetary gear (or a third differential gear) integrally formed with the first planetary gear (or the first differential gear), and a reduction sun gear meshed with the second planetary gear (or the third differential gear).

In the present invention the increased rotational force (greater than that transmitted to the input sun gear) acts on the reduction sun gear with the rotational force thereof being transmitted to the impeller of the speed change controlling system through a connecting shaft integrally formed with the reduction sun gear. A forward rotation brake is used for forward rotation, and a reverse rotation brake or reverse rotation planetary gear set is used for reverse rotation. The output shaft is connected to a carrier or a ring gear.

The speed change controlling system utilizes a torque converter of the type used in conventional automatic transmissions but modified in order for it to function in the present invention. The speed change controlling system utilizes, with reference to the elements used in a conventional torque converter for convenience of explanation, a driving impeller, a driven turbine, a stator for increasing the torque, an oil pump for supplying oil in the torque converter to 100% full and supplying actuating oil to a clutch and a brake, a direct clutch for disconnecting and connecting the input shaft and the impeller, a power mode clutch (or one-way clutch) for disconnecting and connecting the connecting shaft and the impeller, a control shaft connected to the turbine, and a fixed housing.

Although a multi-plate wet type clutch and brake of a conventional automatic transmission can be employed for the clutch and the brake used in the speed change system and speed change controlling system of the present invention, or a band brake for the brake, the clutches and brakes illustrated in the drawings and discussed in the specification are not to be considered as being limited to only those. Other brakes and clutches than those described herein can be used, as appreciated by those skilled in this art.

There are mainly three methods of operation of the continuously variable transmission as described above.

The first is a normal operation mode (forward rotation I state) in which a smooth and quiet feeling of driving is obtained and the vehicle can be driven with an optimum fuel ratio.

The second is a power mode (forward rotation II state) which is used in driving in a mountainous area, driving up an inclined road or where rapid starting is desired.

The third is a combination of the above two modes, with obtaining optimum power performance.

As described, the characteristics and the advantages of the present invention are that the continuously variable transmission according to the present invention facilitates driving in accordance with the required and/or desired power performance.

For a fuller understanding of the nature and objects of the invention, reference should be had to the following detailed description taken in conjunction with the accompanying drawings in which:
Fig. 1 is a sectional view of the speed change controlling system 10 of a continuously variable transmission of the present invention;
Figs. 2 to 6 illustrate a first embodiment of the continuously variable transmission of the present invention;

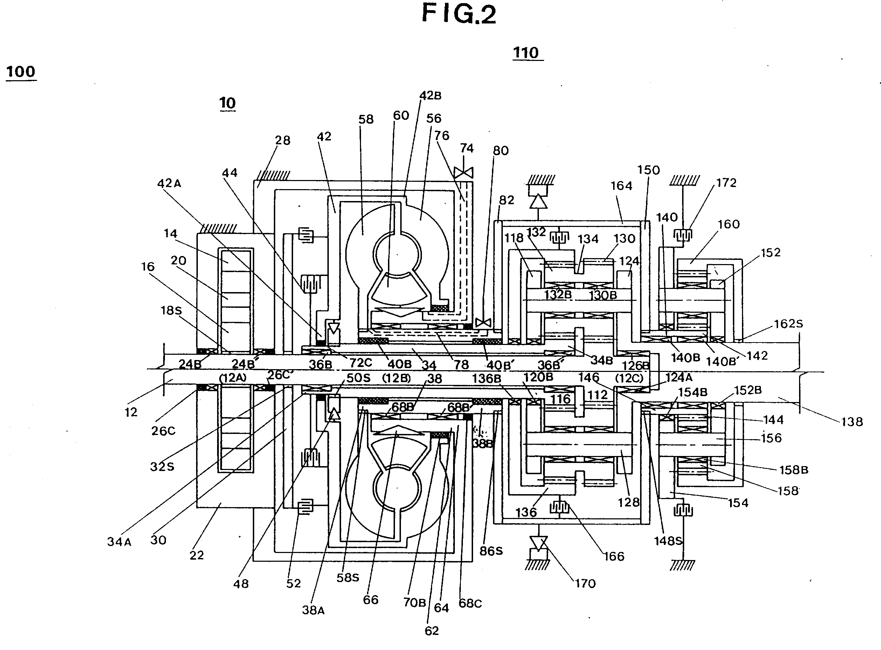

Fig. 2 is a sectional view of the first embodiment;

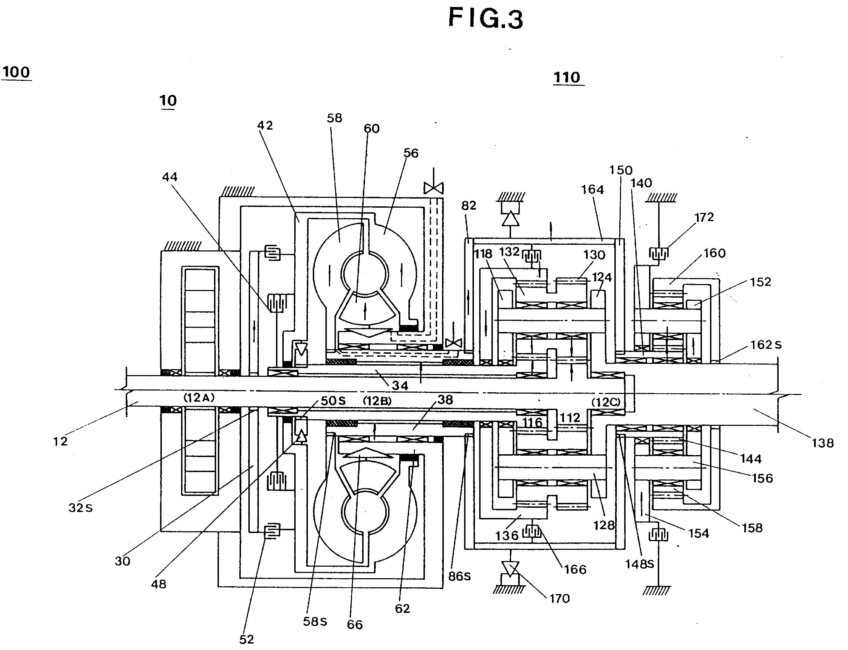

Fig. 3 is a sectional view of the continuously variable transmission in a neutral state;

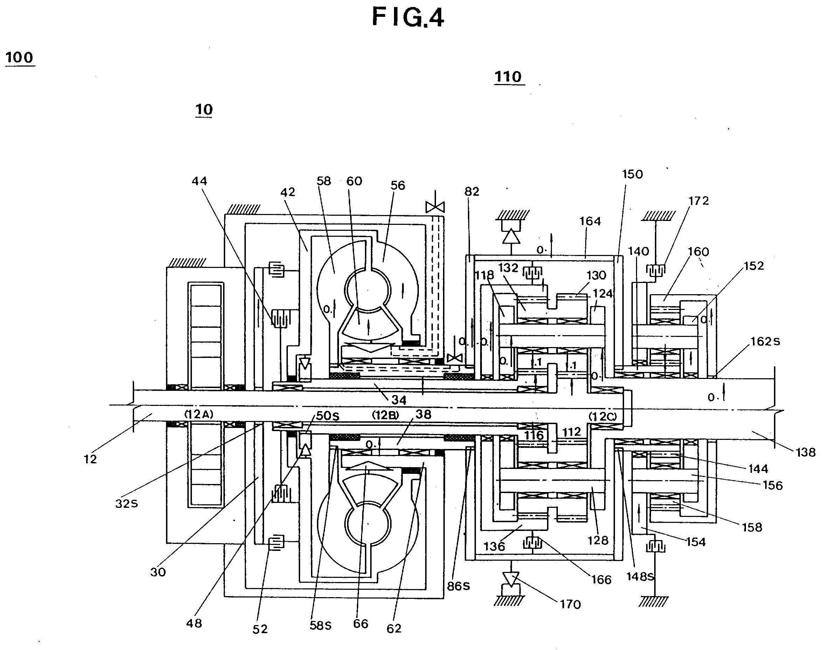

Fig. 4 is a sectional view of the continuously variable transmission showing the forward rotation I state in which the rotational input is divided and sent to the input sun gear and to the impeller of the speed change controlling system connected to the direct clutch when the direct clutch connected to the input shaft is actuated;

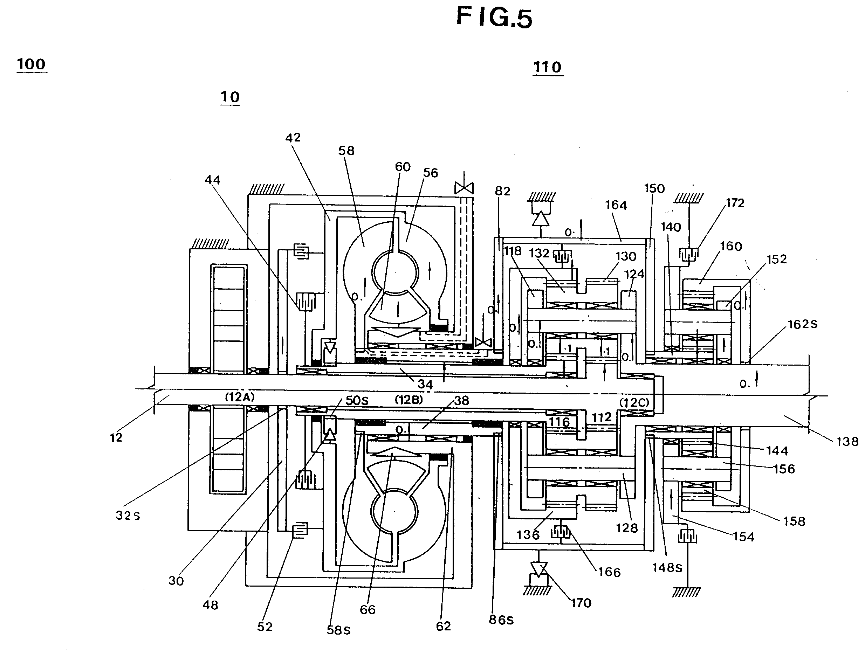

Fig. 5 is a sectional view of the continuously variable transmission showing the forward rotation II state in which the input force transmitted through the input sun gear is increased by the second planetary gear and the reduction sun gear and the increased force acts on the impeller of the speed change controlling system via the connecting shaft and the one-way clutch and is transmitted to the output shaft at the time of releasing the direct clutch connected to the input shaft;

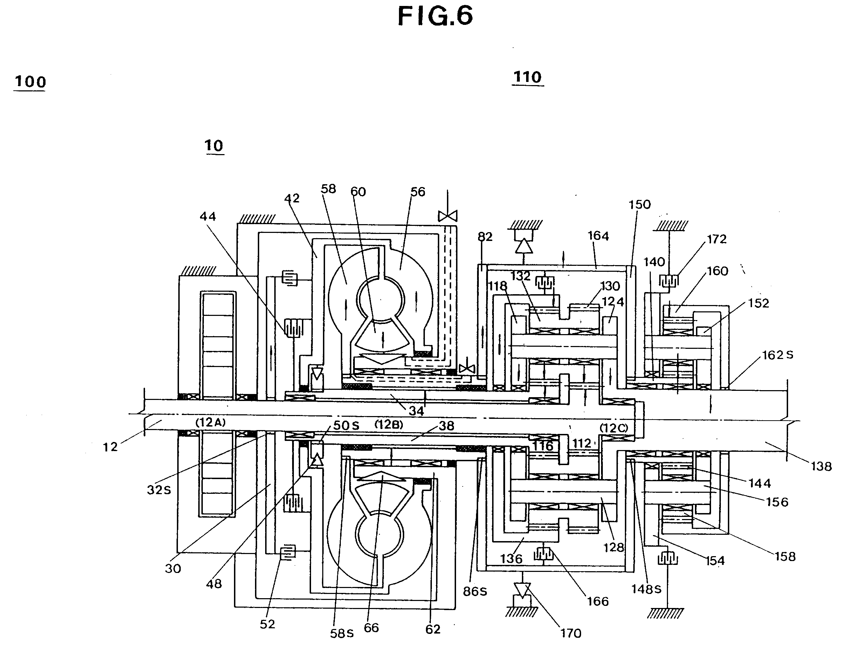

Fig. 6 is a sectional view of the continuously variable transmission showing the reverse rotation state;

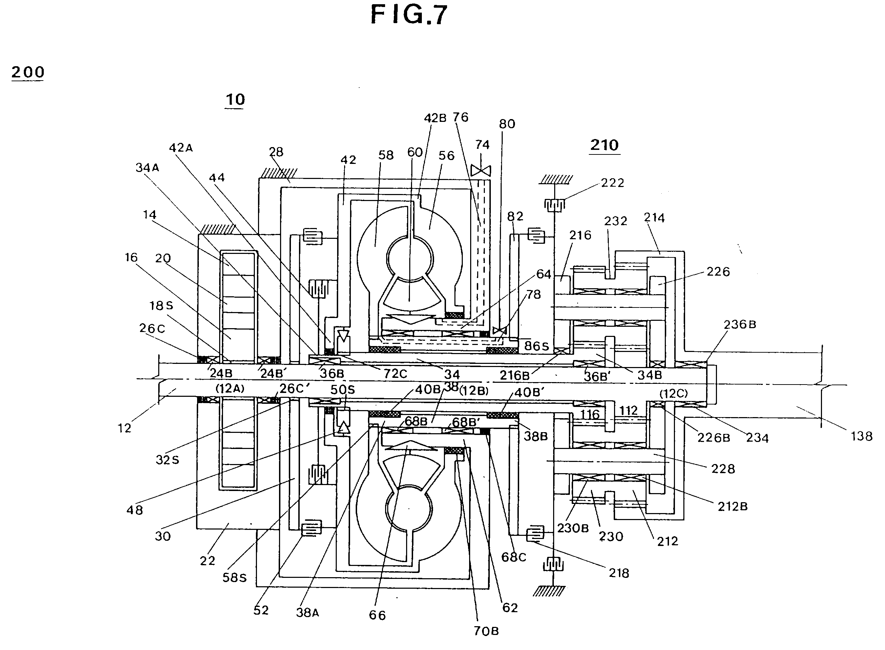

Figs. 7 to 11 illustrate the second embodiment of the continuously variable transmission of the present invention;
Fig. 7 is a sectional view of the second embodiment;

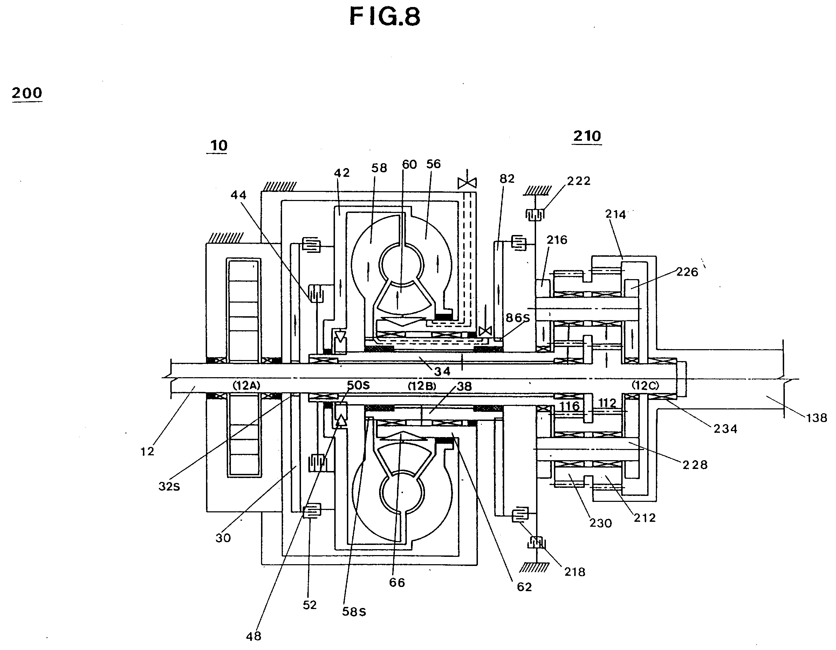

Fig. 8 is a sectional view of the continuously variable transmission in the neutral state;

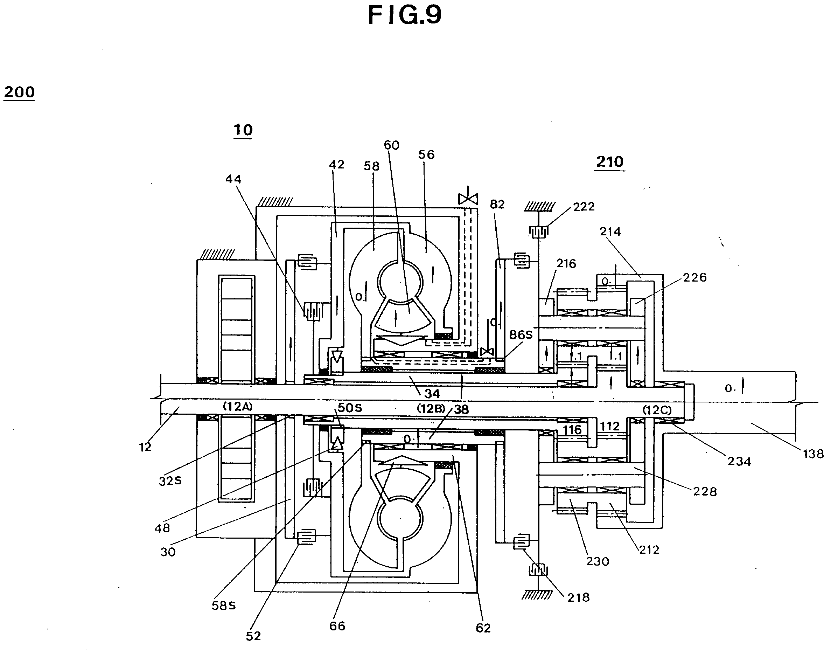

Fig. 9 is a sectional view showing the forward rotation I state in which the input is divided and sent to the input sun gear and to the impeller of the speed change controlling system connected to the direct clutch when the direct clutch connected to the input shaft is actuated;

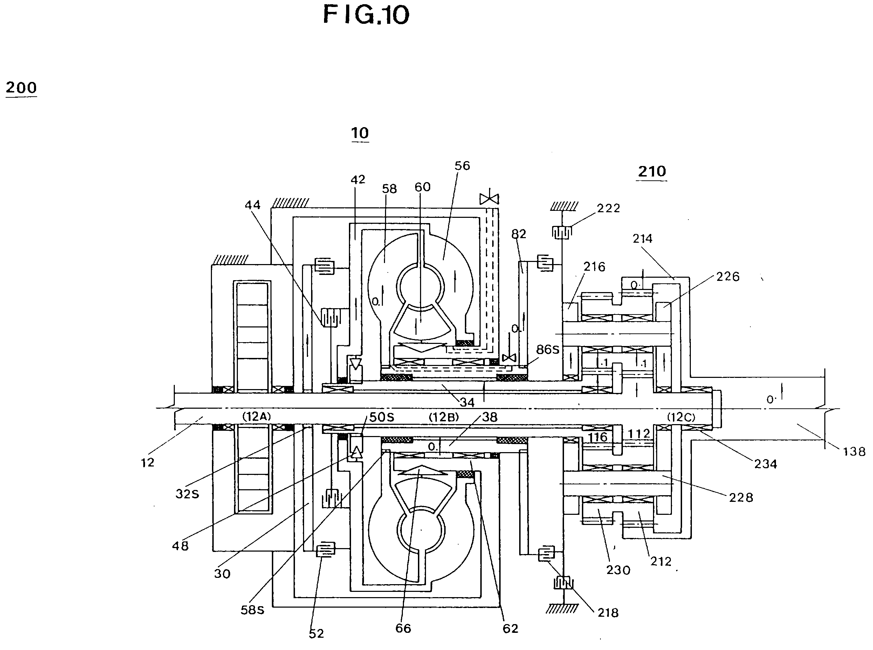

Fig. 10 is a sectional view showing the forward rotation II state in which the input force transmitted through the input sun gear is increased by the secondary planetary gear and the reduction sun gear and the increased force acts on the impeller of the speed change controlling system via the connecting shaft and the one-way clutch and is transmitted to the output shaft at the time of releasing of the direct clutch connected to the input shaft;

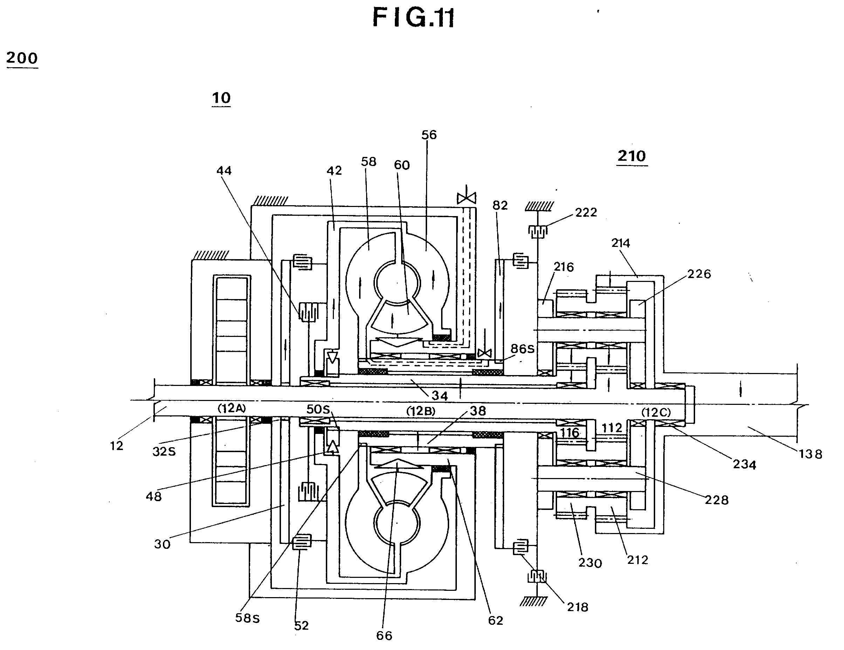

Fig. 11 is a sectional view showing the reverse rotation state;

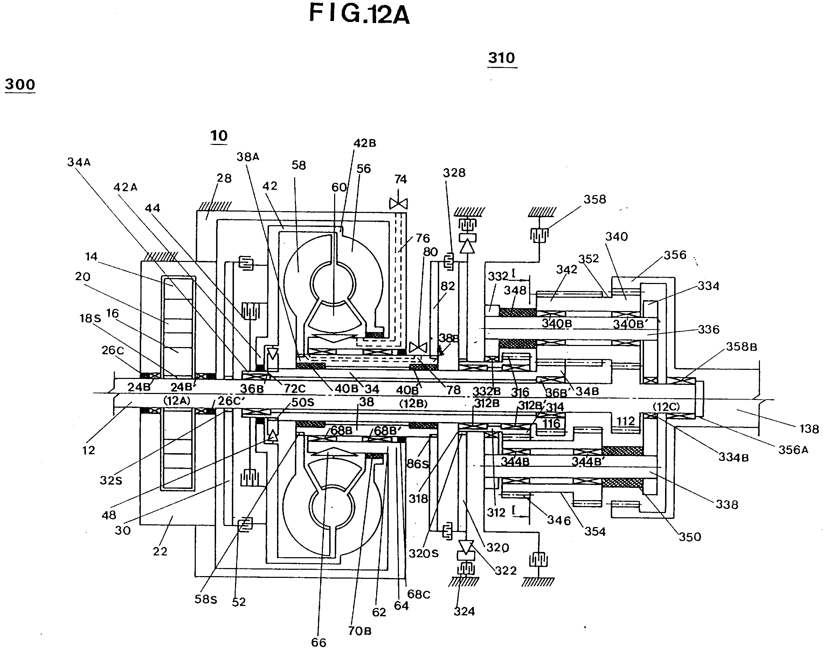

Figs. 12A to 16 illustrate the third embodiment of the continuously variable transmission of the present invention;
Fig. 12A is a sectional view of the third embodiment;

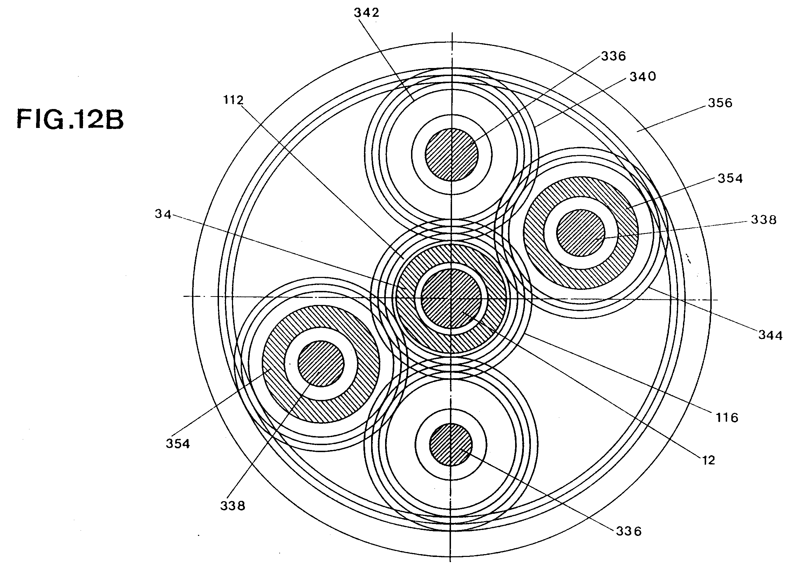

Fig. 12B is a enlarged sectional view taken along a line I-I of Fig. 12A;

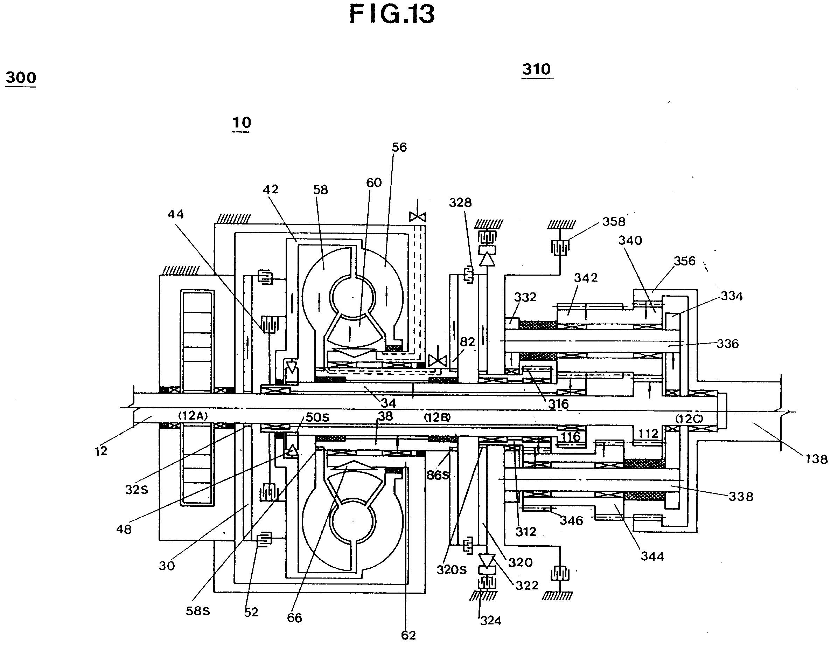

Fig. 13 is a sectional view showing the neutral state;

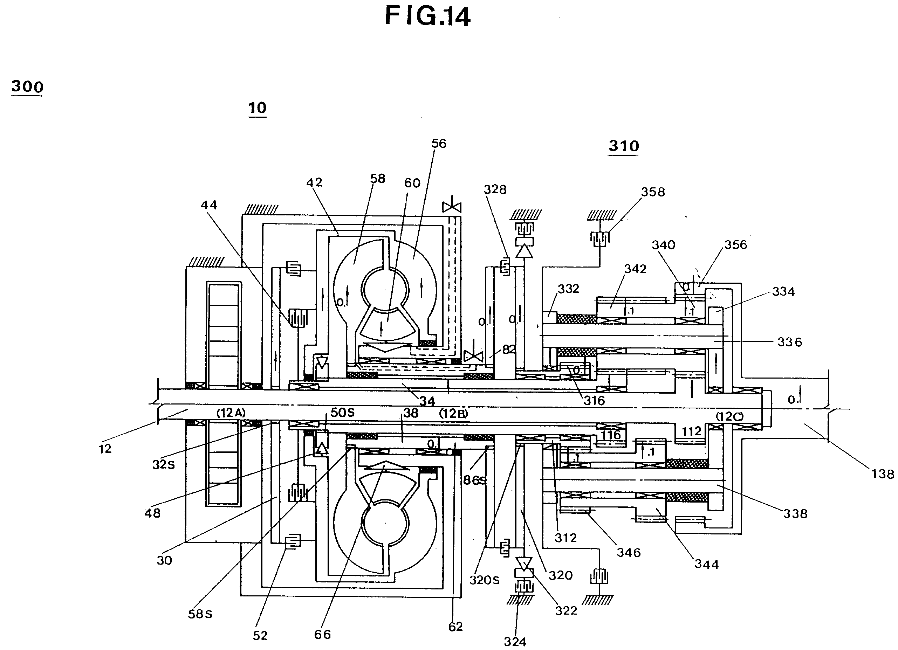

Fig. 14 is a sectional view showing the forward rotation I state in which the input is branched into the input sun gear and the impeller of the speed change controlling system connected to the direct clutch when the direct clutch connected to the input shaft is actuated;

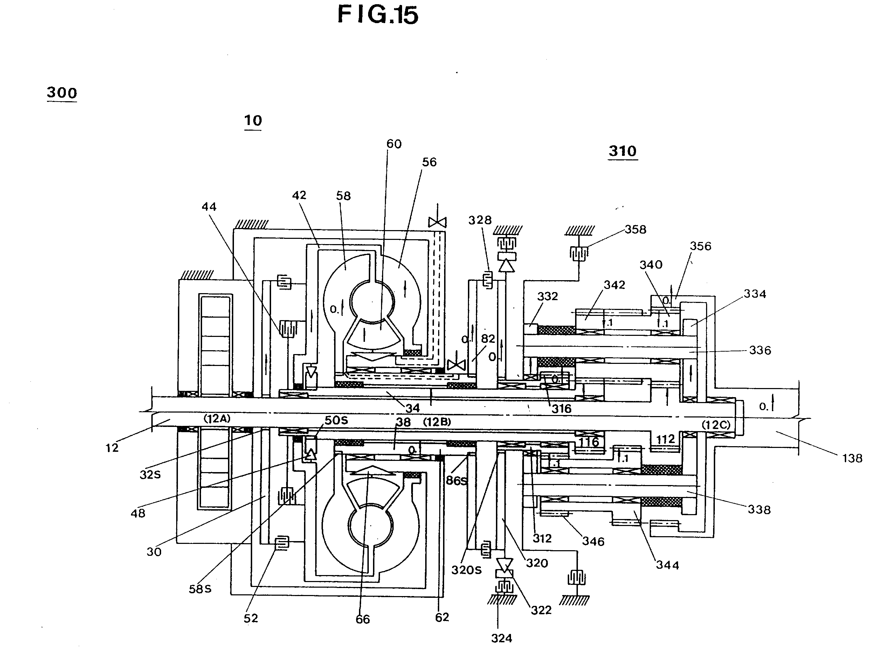

Fig. 15 is a sectional view of the continuously variable transmission of the present invention showing the forward rotation II state in which the input force transmitted through the input sun gear is increased by the third differential gear and a reduction sun gear and the increased force acts on the impeller of the speed change controlling system via the connecting shaft and the one-way clutch and is transmitted to the output shaft at the time of releasing the direct clutch connected to the input shaft;

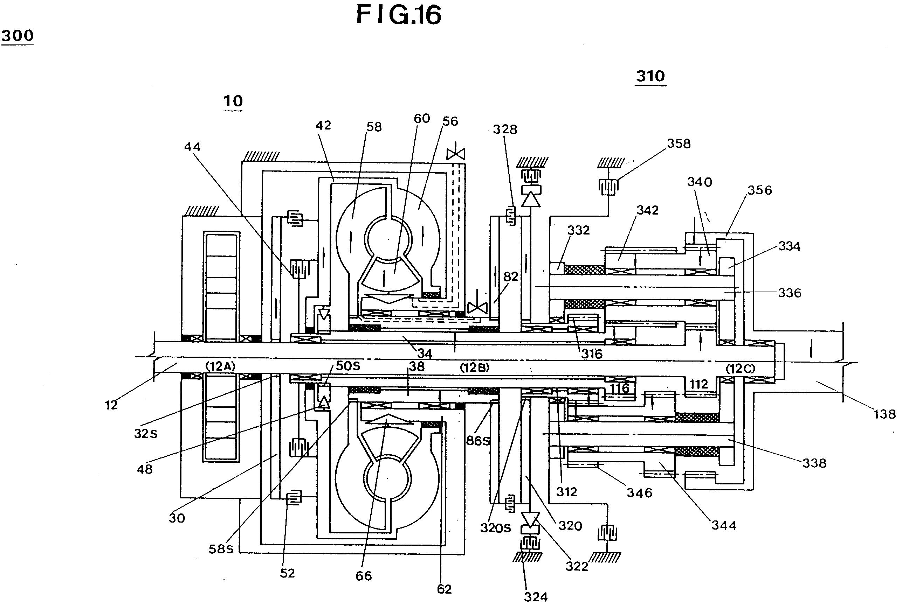

Fig. 16 is a sectional view showing the reverse rotation state;

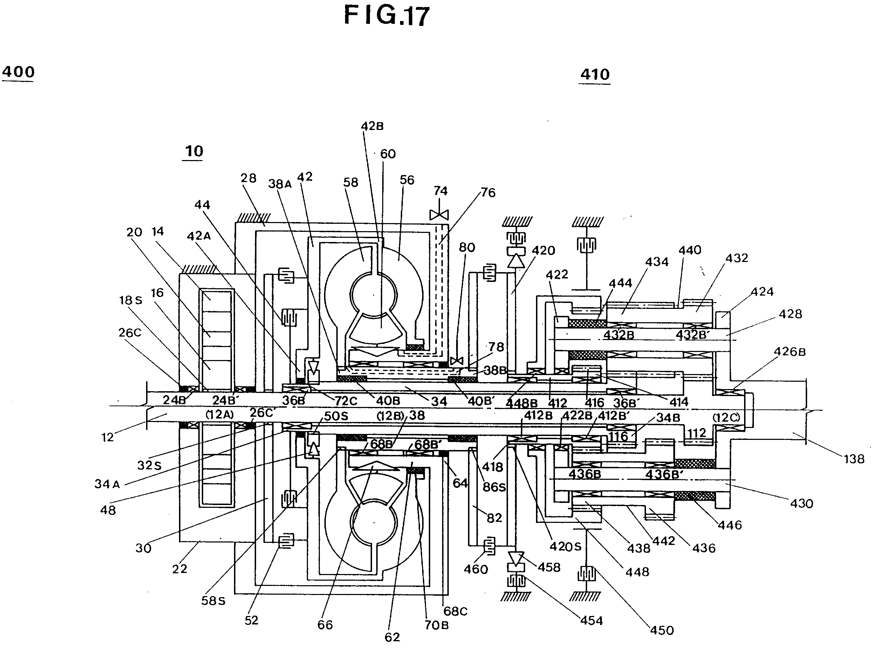

Figs. 17 to 21 illustrate the fourth embodiment of the continuously variable transmission of the present invention;
Fig. 17 is a sectional view of the fourth embodiment;

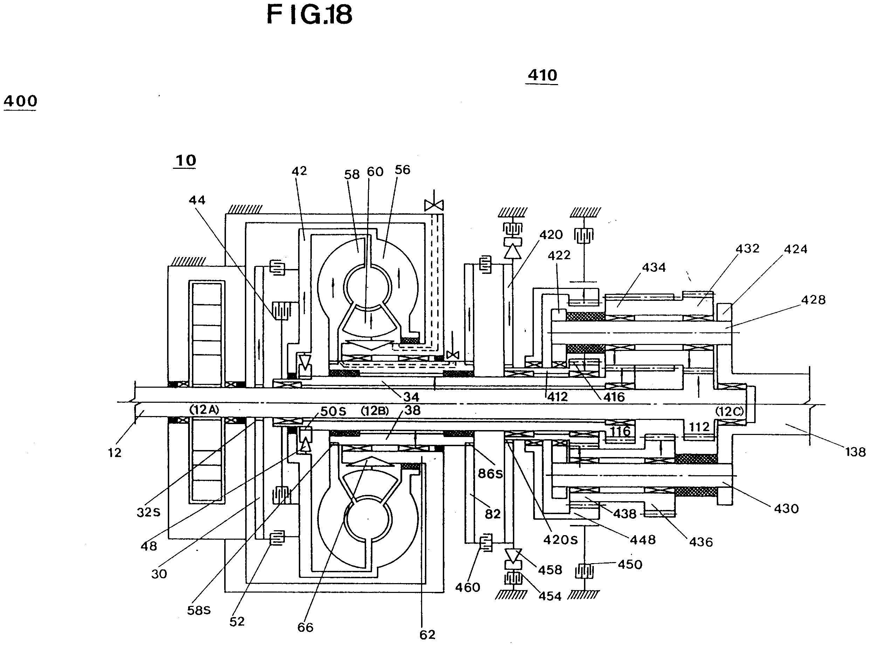

Fig. 18 is a sectional view showing a neutral state;

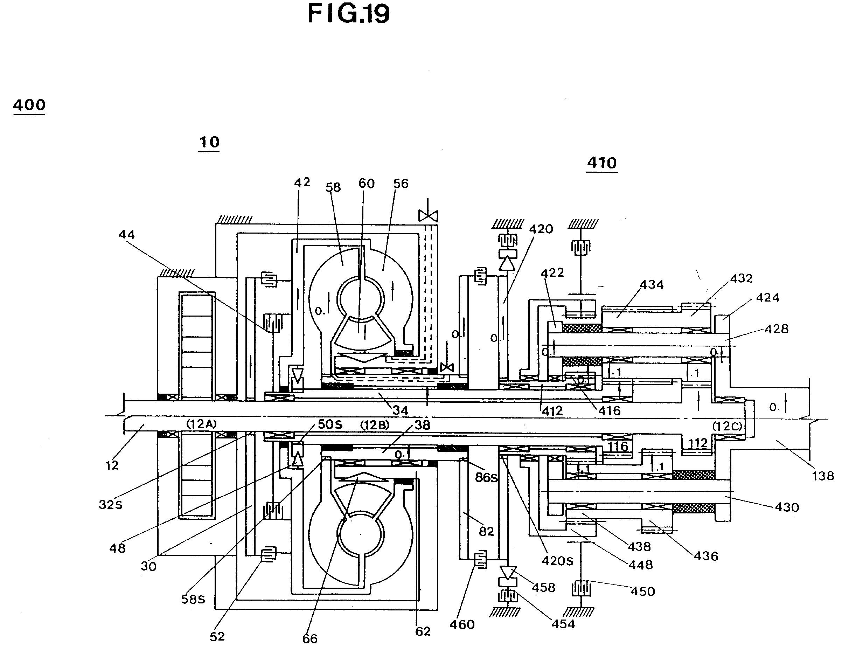

Fig. 19 is a sectional view showing the forward rotation I state in which the input is divided and sent to the input sun gear and the impeller of the speed change controlling system connected to the direct clutch when the direct clutch connected to the input shaft is actuated;

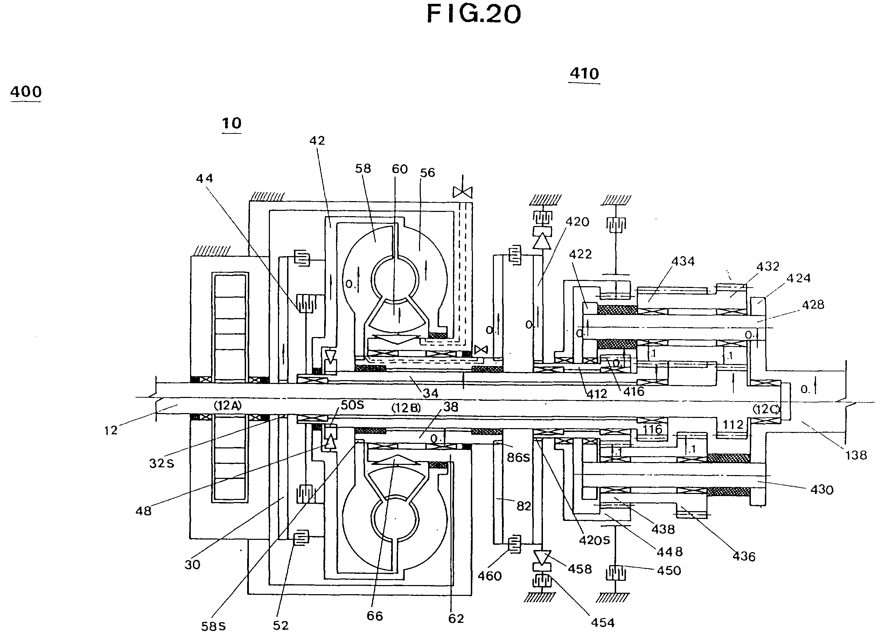

Fig. 20 is a sectional view of the continuously variable transmission of the present invention showing a forward rotation II state in which the input force transmitted through the input sun gear is increased by the third differential gear and the reduction sun gear with the increased force acting on the impeller of the speed change controlling system via the connecting shaft and the one-way clutch and is transmitted to the output shaft at the time of release of the direct clutch connected to the input shaft;

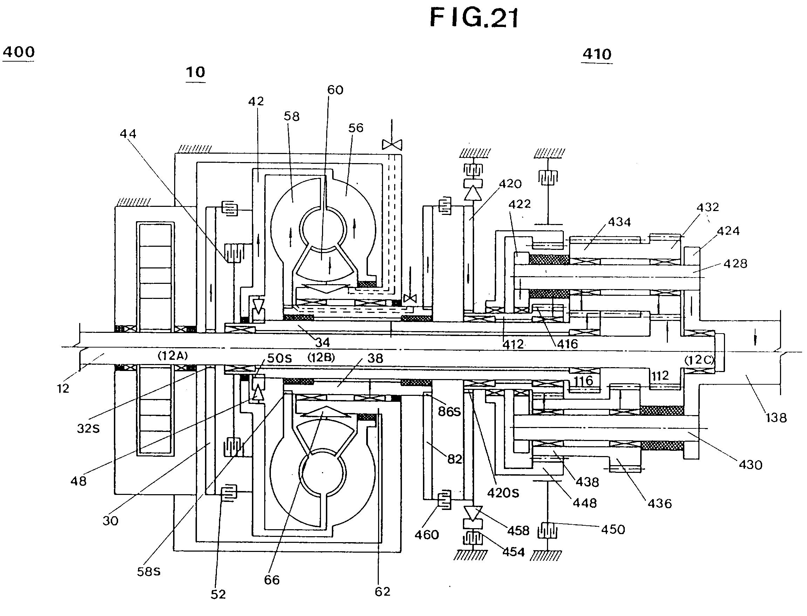

Fig. 21 is a sectional view showing the reverse rotation state;

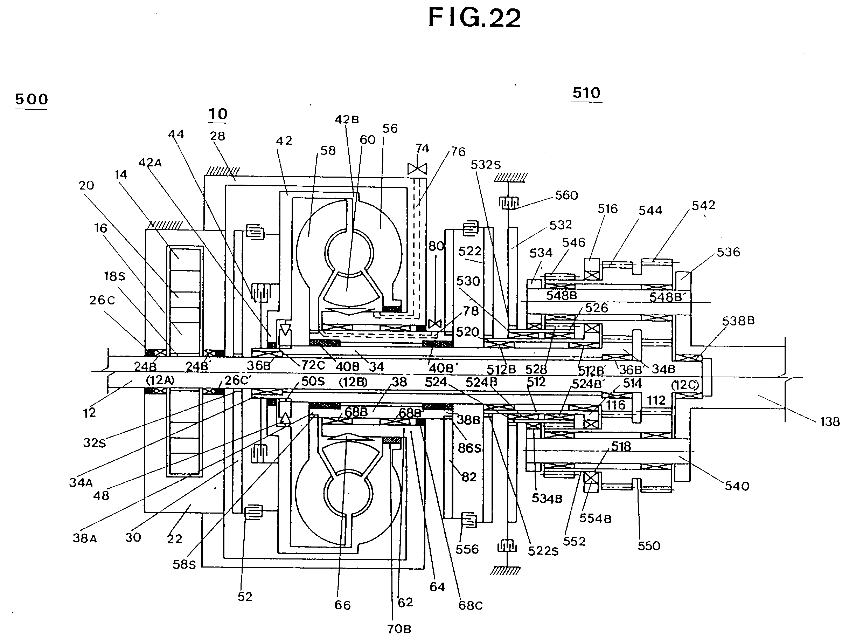

Figs. 22 to 26 illustrate the fifth embodiment of the continuously variable transmission of the present invention;
Fig. 22 is a sectional view of the fifth embodiment;

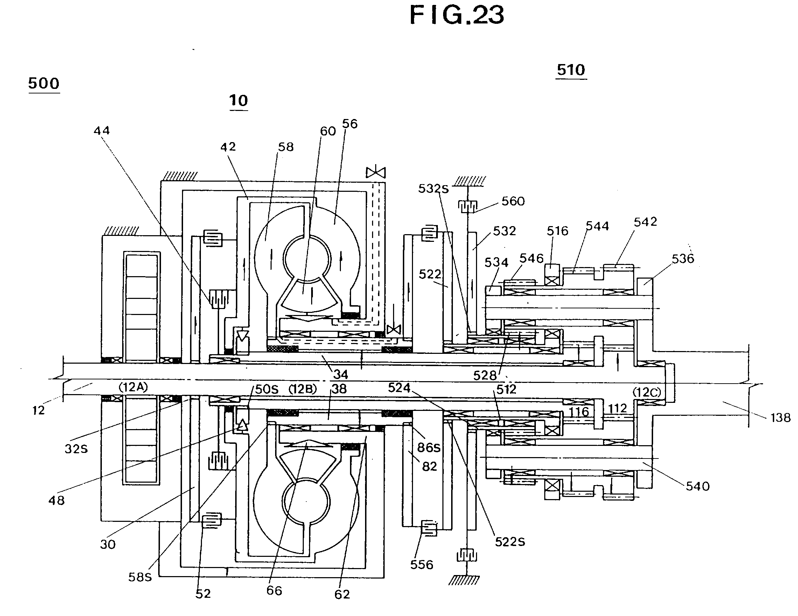

Fig. 23 is a sectional view showing the neutral state;

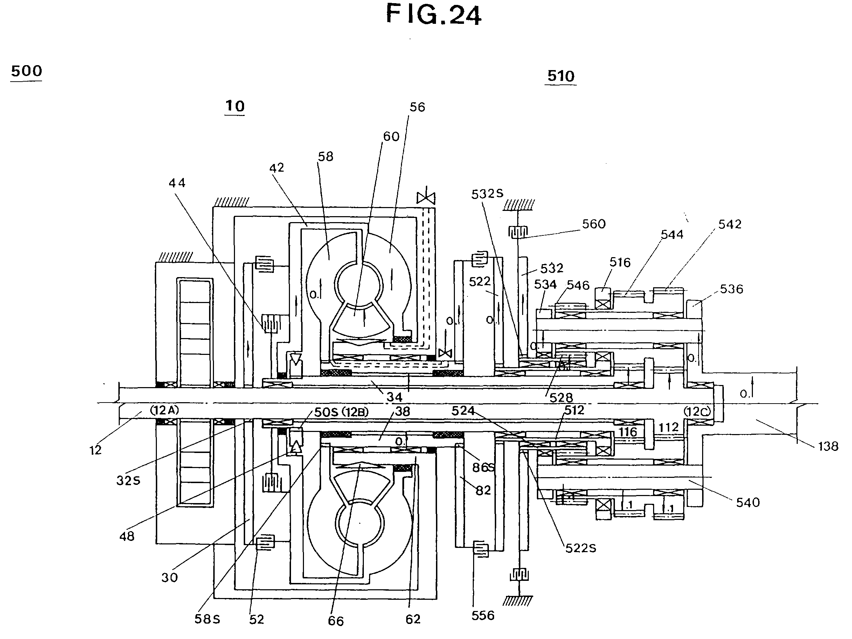

Fig. 24 is a sectional view showing the forward rotation I state in which the input is divided and sent to the input sun gear and to the impeller of the speed change controlling system connected to the direct clutch when the direct clutch connected to the input shaft is actuated:

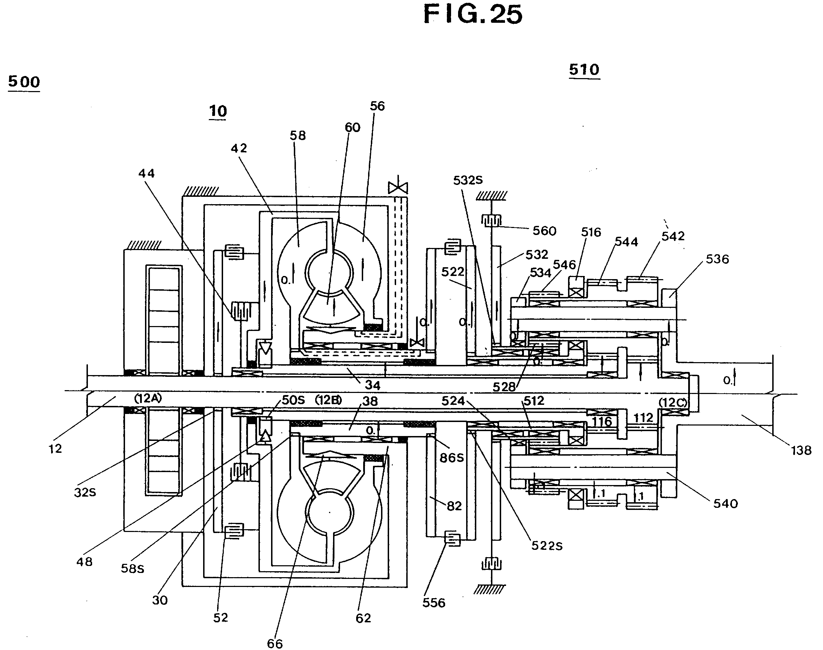

Fig. 25 is a sectional view of the continuously variable transmission showing the forward rotation II state in which the input force transmitted through the input sun gear is increased by the second planetary gear and the reduction sun gear and the increased force acts on the impeller of the speed change controlling system via the connecting shaft and the one-way clutch and is transmitted to the output shaft at the time of release of the direct clutch connected to the input shaft;

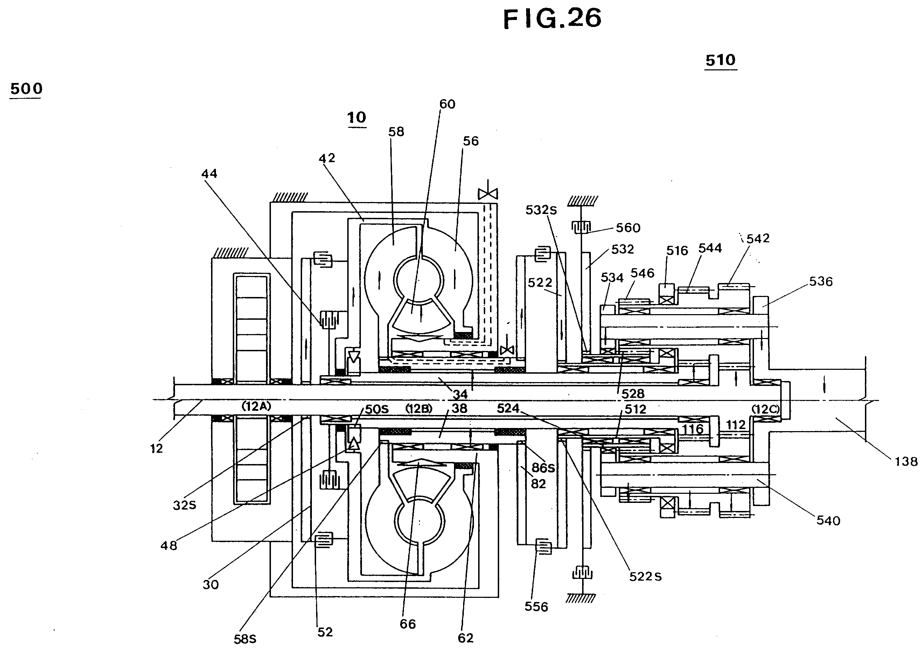

Fig. 26 is a sectional view showing the reverse rotation state;

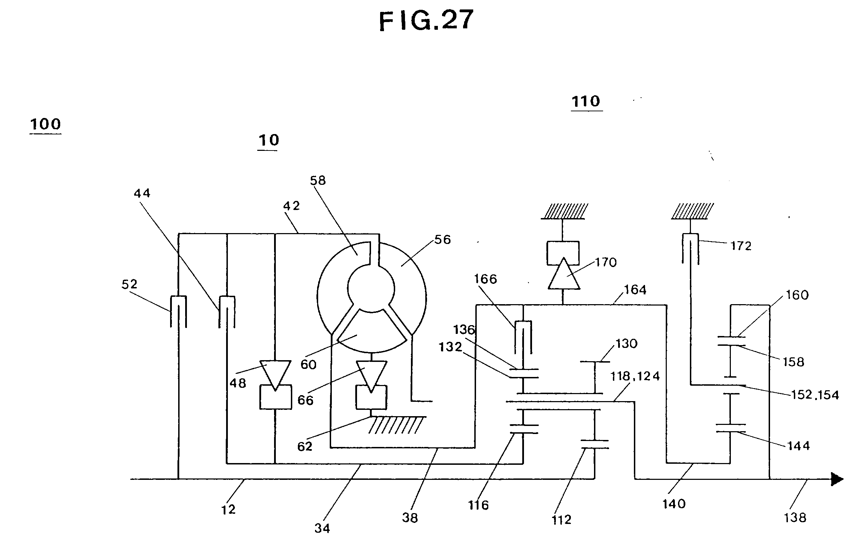

Fig. 27 is a schematic view of the first embodiment of the present invention as shown in Fig. 2;

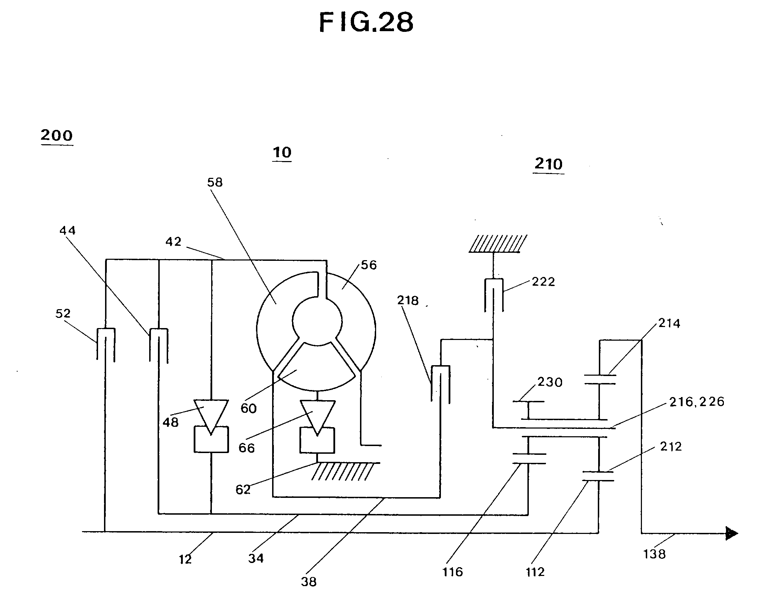

Fig. 28 is a schematic view of the second embodiment of the present invention as shown in Fig. 7;

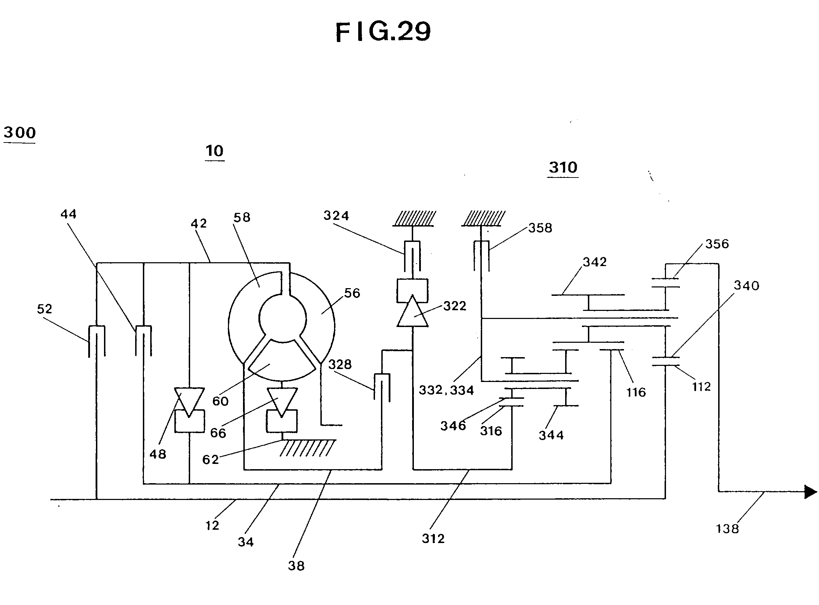

Fig. 29 is a schematic view of the third embodiment of the present invention as shown in Fig. 12A;

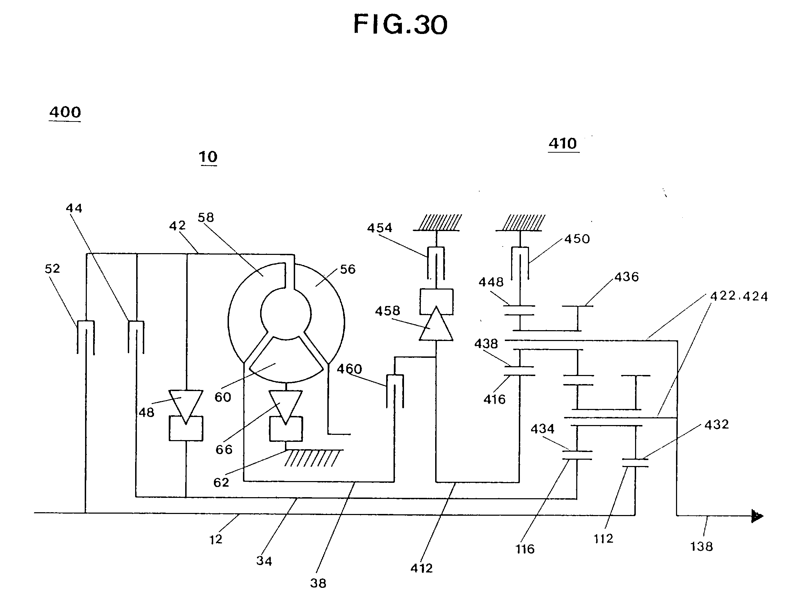

Fig. 30 is a schematic view of the fourth embodiment of the present invention as shown in Fig. 17; and

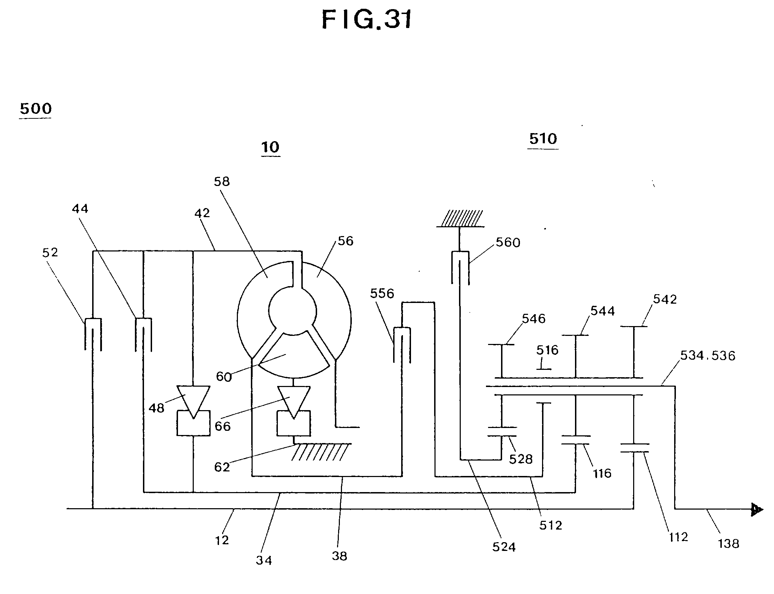

Fig. 31 is a schematic view of the fifth embodiment of the present invention as shown in Fig. 22.

Similar reference characters refer to similar parts through out the several views of the drawings.

A description of the speed change controlling system of the present invention and the continuously variable transmission constructed by connecting the speed change controlling system to the various embodiments of the speed change system is discussed below.

That is, the speed change system can be constructed in various ways, and the speed change controlling system can be properly connected to the speed change system to perform the stepless speed change function.

First, the speed change controlling system 10, the speed change system 110, and their interconnection, is the first embodiment 100 of the present invention which is described below in detail with reference to the accompanying drawings.

### Speed change controlling system 10

The speed change controlling system 10 employs a modified torque converter of the type used in a conventional automatic transmission. An oil pump 14 is installed between the torque converter and the speed change system in a conventional automatic transmission, however, the oil pump is placed between the torque converter and the engine in the present invention due to the necessities of its construction. The rotational power generated by the engine is transmitted along a single path to the input shaft of the transmission via the torque converter in the conventional automatic transmission. However, in the present invention, two methods convey the rotational power generated by the engine. One method directly transmits the power to the input shaft with part of the rotational force of the input shaft being conveyed to the impeller through the direct clutch plate, integrally connected to the input shaft, by activating the direct clutch. The other method directly transmits the rotational force to the impeller through the connecting shaft and through the actuation of the one-way clutch or the power mode clutch installed between the connecting shaft and the impeller housing when the direct clutch is released.

In the conventional torque converter, the power generated by the engine is directly transmitted to the input shaft of the transmission, however, the speed change controlling system of the present invention has two characteristics, one is to steplessly control the speed ratio according to the driving resistance, and the other is to pass the power which passes through the speed change controlling system to the output shaft.

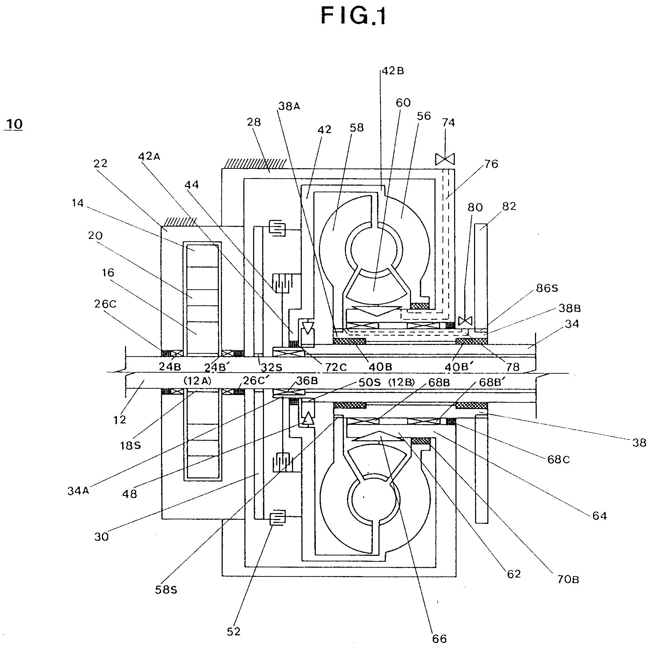

The construction of the speed change controlling system 10 is described below in detail. As shown in Figs. 1 and 2, oil pump 14 is installed on the first section 12A of the input shaft 12, which consists of three sections: the first section 12A, the second section 12B and the third section 12C. The driving gear 16 of the oil pump 14 is connected and secured to the input shaft 12 with a spline 18S. The driving gear 16 and a driven gear 20 of the oil pump are installed in an oil pump housing 22. Bearings 24B, 24B' are inserted between the oil pump housing 22 and the input shaft 12, and oil seals 26C, 26C' are inserted beside the bearings 24B, 24B' to prevent oil leakage from the pump. The oil pump housing 22, housing 28, and the fixed shaft 62 are operatively secured to prevent rotation, as illustrated in Fig. 1. Other construction to achieve this may be used.

The direct clutch plate 30 is integrally connected by a spline 32S to the input shaft 12 between the first section 12A and the second section 12B of the input shaft. The hollow connecting shaft 34, having a first end 34A and a second end 34B, is coaxially installed at the second section 12B of the input shaft 12, with bearings 36B, 36B' inserted between the input shaft 12 and the connecting shaft 34 to permit independent rotation about the input shaft. The hollow control shaft 38, having a first end 38A and a second end 38B, is coaxially and rotatably installed on the connecting shaft 34, and bushings 40B, 40B' are installed between the connecting shaft 34 and the control shaft 38 to permit independent rotation and to also function as an oil sealing means so that oil in the modified torque converter does not leak into the speed change system.

The modified torque converter is coaxially installed on the connecting shaft 34 and the control shaft 38. The power mode clutch 44 is installed between the impeller housing 42 (having a first end 42A and a second end 42B) and the connecting shaft 34; and, the inner wheel of a one-way clutch 48 is connected and fixed by a spline 50S to the connecting shaft 34. The installation direction of the one-way clutch 48 is such that the impeller housing 42 cannot rotate in a direction opposite to the rotational direction of the connecting shaft 34. Thus, the one-way clutch 48 prevents the impeller housing 42 from rotating in a direction opposite to the rotational direction of the input shaft and transmits to the impeller housing 42 power transmitted from the connecting shaft 34. The power mode clutch 44 functions to connect and disconnect the impeller housing 42 and the connecting shaft 34. The direct clutch 52 functions to connect and disconnect the impeller housing 42 with the direct clutch plate 30. The impeller housing operatively encloses the turbine 58, impeller and stator.

A detailed description, beyond that already illustrated in the figures and described herein, regarding the specific installation and positioning of the direct clutch and the power mode clutch is omitted for sake of brevity. The installation, positioning and construction of these clutches can vary widely as long as the purpose of each as described herein is met. Thus, as one skilled in the art will appreciate, the claimed invention should not be limited to the clutches specifically described herein.

The impeller 56 is integrally formed at the second end 42B of the impeller housing 42 and is rotatably mounted on the fixed shaft 62. The fixed shaft 62, of which end 64 is fixed to the housing 28, and secured against rotation as shown in Fig.1, is coaxially mounted on the control shaft 38 to permit rotation of the control shaft 38 via bearings 68B,68B'. The turbine 58, operatively positioned opposite the impeller, is secured to the first end of said control shaft 38A by spline 58S to permit simultaneous rotation with the control shaft 38. The stator 60 is positioned between and below the impeller 56 and the turbine 58, as see Fig. 1, for example. The one-way clutch 66 positioned on the fixed shaft 62, prevents, in use, reverse rotation of the stator which is mounted thereon. Bearings 68B, 68B' and an oil seal 68C are provided between the fixed shaft 62 and the control shaft 38. Bushing 70B is inserted between the impeller 56 and the fixed shaft 62 so as to permit the impeller 56 to rotate freely around the fixed shaft 62 and to prevent oil leakage from the modified torque converter. The oil seal 72C is installed between the first end 42A of the impeller housing 42 and the connecting shaft 34 and proximate the one-way clutch 48 to prevent the oil leakage from the modified torque converter, as see Fig. 2.

Part of the oil discharged from the oil pump 14 enters the inside of the torque converter through oil inlet 74 and inlet passage 76 to completely fill (100%) the inside of the torque converter with oil, and the oil in the torque converter returns to the oil pump via an outlet passage 78 and oil outlet 80 and after first being cooled by a cooler, which is placed outside of the transmission. Part of the oil discharged from the oil pump 14 operates the direct clutch 52, power mode clutch 44, and clutches and brakes of the attached speed change system. Here, since the oil outlet passage and outlet can also be formed on the fixed shaft, and the positions of the oil inlet and inlet passage can be different from those illustrated. The clutch connecting plate 82 is integrally connected through a spline 86S to the second end 38B of the control shaft 38 for power transmission to the speed change system.

### Speed Change System 110

In the speed change system 110 of the first embodiment of the present invention, as shown in Fig. 2, the rotational power of the engine is input to the input shaft 12 and the input sun gear 112. The input sun gear is integrally formed and positioned between the second section 12B and third section 12C of the input shaft 12. The hollow connecting shaft 34 is coaxially and rotationally positioned at the second section 12B of the input shaft. Bearings 36B, 36B' permit the connecting shaft 34 to rotate freely on the input shaft 12. The reduction sun gear 116 is integrally formed at the second end 34B of the connecting shaft 34. The carrier 118 is rotatably positioned on the connecting shaft 34, and a bearing 120B is utilized so that the connecting shaft 34 and the carrier 118 can rotate independently. The carrier 124 includes an axial bore 124A formed therein to rotatably receive a portion of the third section 12C of the input shaft 12 and with the carrier 124 terminating in the output shaft 138. Bearing 126B is inserted between the third section 12C of the input shaft and the axial bore 124A to ensure independent rotation. At least one locking pin 128 is inserted and fixed between the two carriers 118, 124 so that they can rotate together.

At least one planetary gear 130 and one second planetary gear 132 are integrally formed and rotatably installed on the locking pin 128. A gap or recess 134 may be formed between the first planetary gear 130 and the second planetary gear 132, as see Fig. 2, and bearings 130B, 132B are inserted between the locking pin 128 and the combined planetary gears 130, 132 so that the combined planetary gears 130, 132 rotate freely about the pin.

The reduction sun gear 116 is meshed with the inside of the second planetary gear 132 and the forward rotation ring gear 136 is meshed with the outside of the second planetary gear 132. The forward rotation ring gear 136 is rotatably mounted on the connecting shaft 34 so that the forward rotation ring gear 136 can rotate freely and independently by means of bearing 136B, or the like. The input sun gear 112 is meshed with the inside of the first planetary gear 130. The output shaft 138 is integrally and coaxially formed with the carrier 124, as shown in Fig. 2.

In addition, the hollow reverse rotation input shaft 140 is coaxially and rotatably installed on the output shaft 138 so that the reverse rotation input shaft 140 can rotate freely and independently by means of bearings 140B,140B', or the like, which are inserted between the output shaft 138 and the reverse rotation input shaft 140.

The reverse rotation sun gear 144 is coaxially and integrally formed at the second end 142 of the reverse rotation input shaft 140, and the reverse rotation connecting plate 150 is connected to the first end 146 by means of a spline 148S. The reverse rotation carriers 152,154 are spaced apart and rotatably installed on the output shaft 138 and the reverse rotation input shaft 140, respectively, by means of a bearing 152B, 154B, respectively, or the like. At least one locking pin 156 is secured to and interlinks carriers 152, 154 to enable simultaneous rotation of the two carriers 152 and 154.

At least one reverse rotation planetary gear 158 is rotatably mounted on the locking pin 156 by means of a bearing 158B, or the like. The reverse rotation ring gear 160 meshes with the outside of the reverse rotation planetary gear 158 and is secured to the output shaft 138 by means of a spline 162S, or the like. The inside of the reverse rotation planetary gear 158 meshes with the reverse rotation sun gear 144.

The hollow clutch connecting shaft 164 connects the clutch connecting plate 82 and the reverse rotation connecting plate 150 and is placed outside the forward rotation ring gear 136, as illustrated in Fig. 2. The forward rotation clutch 166 connects the clutch connecting shaft 164 and the forward rotation ring gear 136. The one-way clutch 170 is installed outside of and is operatively connected to the clutch connecting shaft 164 to prevent the clutch connecting shaft 164 from rotating in a direction opposite to the input rotational direction. The reverse rotation brake 172 is installed outside of and is operatively connected to the reverse rotation carrier 154.

A detailed description, other than as illustrated in the figures and described herein, regarding the specific installation method or structural relation, etc. of the forward rotation clutch 166, clutch connecting shaft 164 and one-way clutch 170 is omitted for sake of brevity. The installation, positioning and construction of these clutches can vary widely as long as the purpose of each as described herein is met. Thus, the claimed invention should not be limited to only those specifically described herein, as is appreciated by those skilled in this art.

The operation of the continuously variable transmission of the present invention is described below in detail.

### First, normal operation mode

The rotational input to the input shaft is divided and sent to the direct clutch plate 30, and to the input sun gear 112, both integrally connected to the input shaft 12. A portion of the input power is applied to the impeller 56 when the direct clutch 52 is engaged, coupling the direct clutch plate 30 and the impeller housing 42/impeller 56. This results in an increased rotational force, which is greater than the rotational force acting on the impeller 56, due to a difference in rotation of the turbine 58 and the impeller 56, i.e. as the function of a normal torque converter acts on the turbine 58 and is transmitted to the control shaft 38 which is connected to the turbine 58. When the load applied to the control shaft 38 is decreased and the resistance of the impeller 56 and the resistance of the turbine 58 are in equilibrium, the rotation ratio of the turbine 58 and the impeller 56 is expected to be 1:1. However, since 100% efficiency cannot be obtained due to oil slippage in the converter, a lock-up clutch is additionally installed inside the torque converter in a normal torque converter. However, in the present invention, the power mode clutch 44 of simple structure is installed on the impeller 56 and the connecting shaft 34 so when the direct clutch 52 and the power mode clutch 44 are simultaneously operated, a lock-up function is attained. (Lock-up function: means an integral connection of the impeller and the turbine).

### Second, power mode

Here the direct clutch 52, coupling the direct clutch plate 30 to the impeller housing 42, is released and the one-way clutch 48 is in operation. The power transmitted through the input sun gear 112 is divided into two parts, with one part transmitted to the output shaft 138 through the first planetary gear 130 of the speed change system, and with the other part transmitted to the reduction sun gear 116, which is meshed with the second planetary gear 132 and which is integrally formed with the first planetary gear 130, where the input (torque) is increased and transmitted to the impeller through the connecting shaft 34 and the one-way clutch 48. A larger rotational force than that acting on the impeller 56 in the above described normal operation mode is generated and transmitted to the control shaft 38 via turbine 58. The lock-up function is the same as for the above described normal operation mode.

### Third, combined normal mode and power mode operation

A description is given for two situations:
(1) shifting from the power mode to the normal operation mode mode, and
(2) shifting from the normal operation mode to the power mode.

**(1) FROM POWER MODE TO NORMAL OPERATION MODE** is initiated by engaging direct clutch 52. Since the one-way clutch 48 is between the connecting shaft 34 and the impeller housing 42, the rotational speed of the connecting shaft 34 is always lower than that of the input shaft 12, and therefore, if the direct clutch plate 30, secured to the input shaft 12 with the spline 32S, is connected to the impeller housing 42 by engaging the direct clutch 52, the connecting shaft 34 idles due to the one-way clutch 48.
**(2) FROM NORMAL OPERATION MODE TO POWER MODE** is initiated by releasing the direct clutch 52.

A description of the operational methods for each speed change condition (neutral, forward rotation, reverse rotation) of the continuously variable transmission of the first embodiment of the present invention constructed as described above and the power transmission processes according to the methods appears below.

Although the continuously variable transmission of the present invention can be used to power any mechanism, such as an automobile or an industrial machine, a description of its use in an automobile is presented below.

For defining certain terms, rotation of each planetary gear (or differential gear) means rotation about its own axis (locking pin, here), and revolution means where the carrier itself rotates, in which case normally the planetary gear (or differential gear) performs a combined rotation and translation.

In addition, in the present application counterclockwise rotation, when viewed from the left side of each figure, is defined as the direction of the input shaft, and the direction which is the same as the direction of the input shaft is defined as direction ↑ (or direction A) in the figures, and likewise, the direction opposite to the direction of the input shaft is defined as direction ↓ (or direction B); rotation after a stop (acceleration state) is denoted as 0.↑ (or 0.↓); a stop after rotation (deceleration state) is denoted as ↑.0 (or ↓.0), a rotational state up to a high speed state (that is, all the rotating bodies rotate as an integral body without rotation of each body) after a planetary gear (or differential gear) continues to rotate is denoted as ↑.1 (or ↓.1).

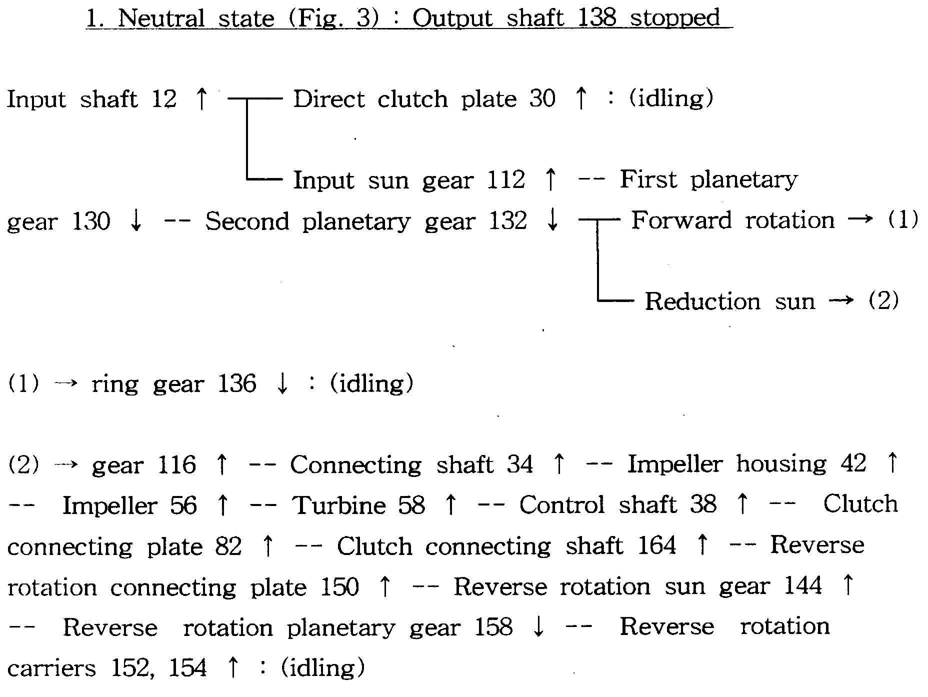

The neutral state is a state in which the direct clutch 52, the power mode clutch 44, the forward rotation clutch 166 and the reverse rotation brake 172 are all in the released state (uncoupled state), with the result that the power of the engine cannot rotate the output shaft 138 and dissipates within the transmission of the present invention.

That is, if a load is applied to the output shaft 138, carriers 124,118 and the reverse rotation ring gear 160, will stop, and if power from the engine is input, the input shaft 12 rotates, so that the input sun gear 112 rotates in the same direction, direction A, and the direct clutch plate 30, connected to the input shaft 12 with the spline 32S, idles due to the release of the direct clutch 52.

As the input sun gear 112 rotates, the first planetary gear 130, meshed with the input sun gear 112, rotates in direction B. Therefore, the second planetary gear 132, integrally formed with the first planetary gear 130, rotates in direction B, and the forward rotation ring gear 136, meshed with the second planetary gear 132, rotates in direction B and idles due to the release of the forward rotation clutch 166. The reduction sun gear 116 (meshed with the second planetary gear 132), the connecting shaft 34 (integrally formed with the reduction sun gear 116), the impeller housing 42, (due to the one-way clutch 48 installed between the connecting shaft 34 and the impeller housing 42), and the impeller 56 (integrally formed with the impeller housing 42) all rotate in direction A.

Turbine 58 (due to the force of the flow of the fluid generated by the impeller rotating in direction A) rotates in direction A thereby causing the control shaft 38 (which is connected to the turbine 58), the clutch connecting plate 82, (connected to the control shaft 38), the clutch connecting shaft 164 (connected to the clutch connecting plate 82), and the reverse rotation sun gear 144, (connected to the clutch connecting shaft 164), to all rotate in direction A. The reverse rotation planetary gear 158, meshed with the reverse rotation sun gear 144, rotates in direction B. The reverse rotation ring gear 160, meshed with the outside of the reverse rotation planetary gear 158, is stopped since it is connected to the output shaft 138 with the spline 162S, and the reverse rotation carriers 152,154 rotating in direction A are idling due to the release of the reverse rotation brake 172.

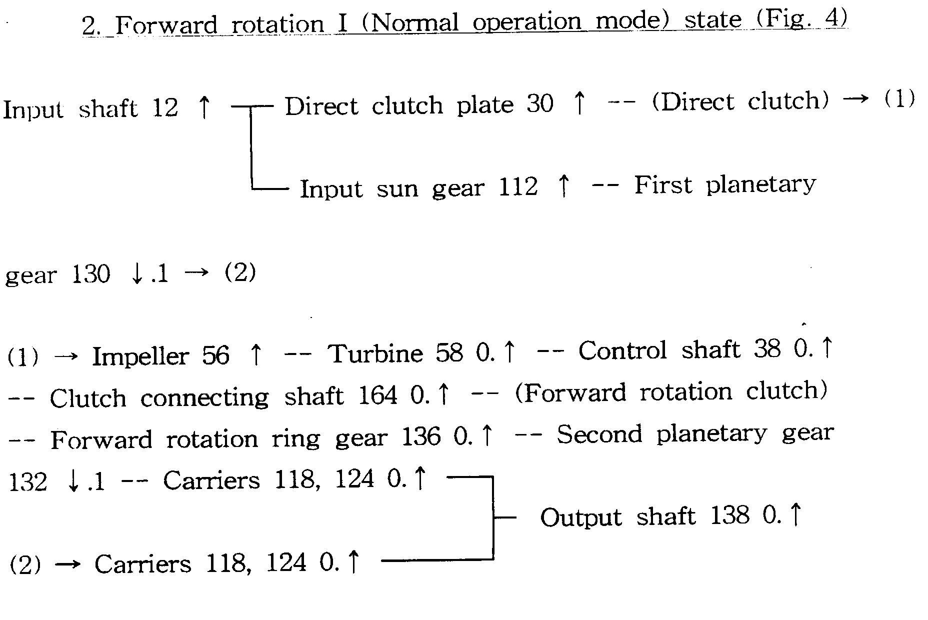

Reviewing the process of the stepless transmission from the low stage to high stage, the rotational power of the engine transmitted to the input shaft 12 flows to the direct clutch plate 30 and to the input sun gear 112, and if, from the neutral state (Fig. 3), the direct clutch 52 and the forward rotation clutch 166 are actuated at the same time, the impeller housing 42 and the integrally formed impeller rotate in direction A (the same as the input direction due to the rotation of the direct clutch plate 30 connected to the input shaft 12 and the direct clutch 52 activation).

On the other hand, the input sun gear 112 rotates in direction A, the same as the input shaft 12, and the first planetary gear 130 (meshed with the input sun gear 112) rotates in direction B. The second planetary gear 132, integrally formed with the first planetary gear 130, rotates in direction B. The reduction sun gear 116 (meshed with the inside of the second planetary gear 132) rotates in direction A, and also the connecting shaft 34 (integrally formed with the reduction sun gear 116) rotates in direction A. The impeller housing 42 rotates the same number of revolutions as the input shaft 12. The connecting shaft 34 always rotates the same number of revolutions, or less, than that of the input sun gear 112 due to the second planetary gear 132 and the reduction sun gear 116, therefore, the connecting shaft 34 always idles due to the one-way clutch 48.

In the neutral state, the turbine 58 rotates in direction A, which is the same as that of the impeller 56, because of the flow of the fluid forced by the impeller against the turbine, and the forward rotation ring gear 136, meshed with the outside of the second planetary gear 132, idles in direction B. If the forward rotation clutch 166 is actuated, the forward rotation ring gear 136 is restrained in its revolution in direction B due to the one-way clutch 170 installed at the outer diameter of the clutch connecting shaft 164 so as to momentarily stop. When the forward rotation ring gear 136 is stopped, resistance is imposed on the clutch connecting shaft 164 (connected to the forward rotation clutch 166), the clutch connecting plate 82 (connected to the clutch connecting shaft 164), the control shaft 38 (connected to the clutch connecting plate 82), and the turbine 58 (connected to the control shaft). The rotation of the turbine 58, which was rotating at the same number of revolutions and in the same direction as the impeller 56, is reduced or stops due to the resistance, thereby causing a difference in the number of revolutions between the impeller 56 and the turbine 58.

Since, due to the characteristics of the torque converter, as the difference between the revolutions of the impeller 56 and the turbine 58 becomes greater, a larger rotational force is generated and transmitted to the turbine 58, if the rotational force transmitted to the turbine 58 is in equilibrium with the resistance acting on the turbine due to the load on the output shaft 138, the output shaft 138 is driven. This state is the low speed starting condition.

If the rotational output of the engine is increased, the difference between the revolutions of the impeller 56 and the turbine 58 becomes large, therefore, the rotational force transmitted to the turbine is increased. In case where the rotational force transmitted to the turbine 58 is larger than the resistance acting on the turbine due to the load on the output shaft 138, the rotation of output shaft 138 increases until the rotational force of the turbine transmitted by the impeller 56 comes into equilibrium with the resistance acting on the turbine.

If the output shaft 138 is accelerated, since the load on the output shaft 138 is decreased, the resistance acting on the turbine 58 is also decreased. If the resistance acting on the turbine 58 is decreased, the difference between the revolutions of the impeller 56 and the turbine 58 is decreased until the rotational force is equal with the resistance. Therefore, the revolutions of the turbine increase in direction A, which is the same direction as the impeller 56, and the revolutions of the forward rotation ring gear 136, integrally formed with the turbine, also increase in direction A. In the case where the load on the output shaft 138 is further reduced so as to come into equilibrium with the driving force of the input shaft 12, the impeller 56 and the turbine 58 perform 1:1 rotations, the first planetary gear 130 and the second planetary gear 132 do not rotate, and all the rotational bodies rotate (revolve) as an integral body. This is the high speed condition.

As described above, a characteristic of the present embodiment (as for the other embodiments) is that the required speed change ratio is steplessly changed according to the load on the output shaft.

It is usually not possible to obtain 100% efficiency where the revolutions of the impeller and the turbine become equal (1:1) because of oil slippage in the torque converter when the oil is acting between the impeller and the turbine. However, an attribute of the present invention is that a decrease in efficiency due to oil slippage can be prevented by actuating the power mode clutch 44.

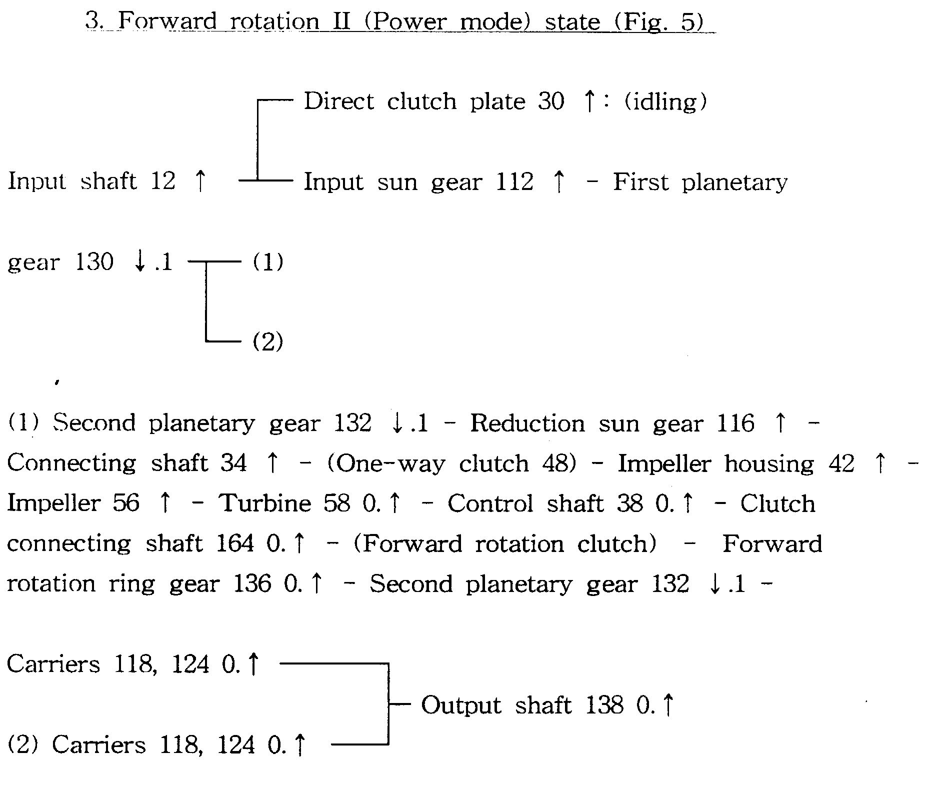

When compared with the above described state of normal operation mode of forward rotation I, although the rotational direction and the stepless speed change process of each part is the same, the power transmission path to the impeller 56 is different in this state. If the forward rotation clutch 166 is actuated or the forward rotation clutch 166 and the power mode clutch 44 are simultaneously actuated in the neutral state, the state is changed to that of the power mode. Here, only the operation of the forward rotation clutch 166 is described.

The input sun gear 112 (integrally formed with the input shaft 12) rotates in direction A, the first planetary gear 130 (meshed with the input sun gear 112) rotates in direction B, and the second planetary gear 132 (integrally formed with the first planetary gear 130) rotates in direction B. The reduction sun gear 116 (meshed with the inside of the second planetary gear 132) is reduced in rotational speed in direction A, and the connecting shaft 34 (integrally formed with the reduction sun gear 116) rotates in direction A. The impeller housing 42 rotates in direction A due to the one-way clutch 48, and the impeller 56 (integrally formed with the impeller housing 42) rotates in direction A.

In the neutral state, the turbine 58 facing the impeller 56 rotates in direction A, which is the same direction as the impeller 56, due to the force of the fluid against the turbine, and the forward rotation ring gear 136, meshed with the outside of the second planetary gear 132, idles in direction B which is opposite to the input shaft. Here, if the forward rotation clutch 166 is actuated, the forward rotation ring gear 136 is restrained in its rotation in direction B and momentarily stops due to the one way-clutch 170 installed at the outer diameter of the clutch connecting shaft 164. If the forward rotation ring gear 136 is stopped, resistance is imparted to the clutch connecting shaft 164 (connected to the forward rotation clutch); the clutch connecting plate 82 (connected to the clutch connecting shaft 164), the control shaft 38 (connected to the clutch connecting plate 82), and the turbine 58 (connected to the control shaft). The turbine 58 which was rotating at the same number revolutions and in the same direction as the impeller 56 is reduced in its rotational speed or stops due to the resistance, thereby causing a difference in the revolutions between the impeller 56 and the turbine 58.

Since, due to the characteristics of the torque converter, as the difference between the revolutions of the impeller 56 and the turbine 58 becomes larger, a larger rotational force is generated and transmitted to the turbine 58, if the rotational force transmitted to the turbine 58 is in equilibrium with the resistance acting on the turbine due to the load on the output shaft 138, the output shaft 138 is driven. This is the low speed starting condition.

If the revolutions of the engine are increased, the difference in the revolutions of the impeller 56 and the turbine 58 becomes large, therefore, the rotational force transmitted to the turbine is increased. In the case where the rotational force transmitted to the turbine 58 is larger than the resistance acting on the turbine due to the load on the output shaft 138, the output shaft 138 is accelerated until the rotational force of the turbine transmitted from the impeller 56 comes into equilibrium with the resistance acting on the turbine.

If the output shaft 138 is accelerated, since the load on the output shaft 138 is decreased, the resistance acting on the turbine 58 is also decreased. If the resistance acting on the turbine 58 is decreased, the difference in the revolutions of the impeller 56 and the turbine 58 is decreased until the rotational force comes into equilibrium with the resistance. Therefore, the revolutions of the turbine are increased in direction A, which is the same direction as the impeller 56, and the revolutions of the forward rotation ring gear 136 integrally formed with the turbine are also increased in direction A. In the case where the load on the output shaft 138 becomes further reduced so as to come into equilibrium with the driving force of the input shaft 12, the impeller 56 and the turbine 58 perform 1:1 rotations, the first planetary gear 130 and the second planetary gear 132 do not rotate, and all the rotational bodies rotate (revolve) as an integral body. This state is the high speed condition. In this high speed state, 100% efficiency at which the speed change ratio of the input to output becomes 1:1 can not be obtained since the ratio of revolutions of the impeller 56 and the turbine 58 does not become 1:1 due to the slippage of oil between the impeller 56 and the turbine 58, therefore, 100% efficiency is obtained by making the input shaft 12 and the output shaft 138 a single unit by simultaneously actuating the power mode clutch 44 and the direct clutch 52.

Reviewing the rotational force transmitted to the impeller 56 of this invention, since the rotational force (increased more than that of the input shaft 12 by the second planetary gear 132 and the reduction sun gear 116) is transmitted to the impeller through the connecting shaft 34, a greater rotational force than that transmitted to the turbine at the time of speed change at the above described normal operation mode is present, and therefore, the output shaft is driven with a large rotational force at the time of low speed so as to improve acceleration and efficiency.

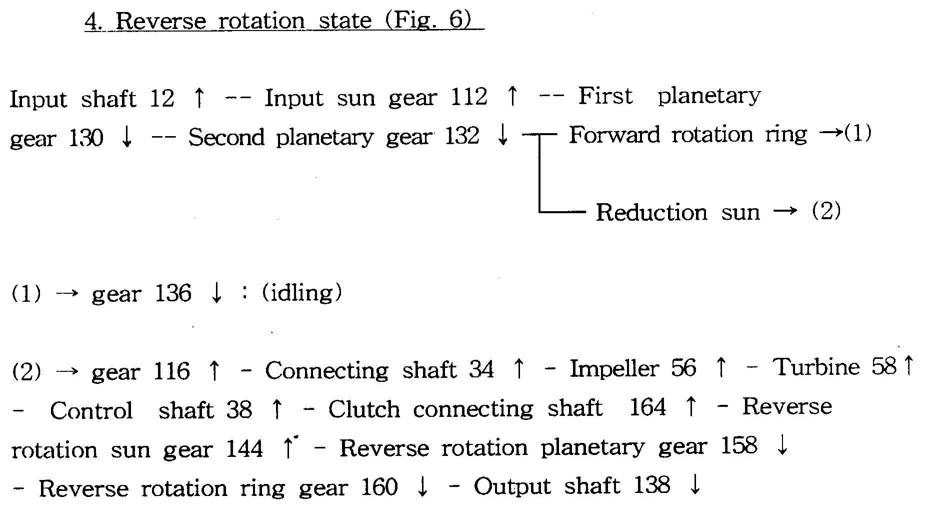

In the reverse rotation state, the direct clutch 52 and the forward rotation clutch 166 are both released, and the power mode clutch 44 and the reverse rotation brake 172 are both actuated. Upon inputting power to the input shaft 12, the input sun gear 112 rotates in direction A, which is the same direction as the input shaft 12, and the first planetary gear 130 rotates in direction B, which is opposite to the input sun gear 112. The second planetary gear 132 also rotates in direction B, and the forward rotation ring gear 136 meshed with the outside of the second planetary gear 132, idles in direction B. The reduction sun gear 116 meshed with the inside of the second planetary gear 132 rotates in direction A which is opposite to the second planetary gear 132. The connecting shaft 34, connected to the reduction sun gear 116, the impeller housing 42, connected to the connecting shaft through the power mode clutch 44 or the one-way clutch 48, and the impeller 56, integrally formed with the impeller housing, all rotate in direction A, along with the turbine 58 which also rotates in direction A due to the force of the oil moved against the turbine blades by the impeller 56.

The turbine 58 secured to the control shaft 38, which is secured to the clutch connecting plate 82, which is secured to the clutch connecting shaft 164, which is secured to the reverse rotation connecting plate 150, which is secured to the reverse rotation input shaft 140, upon which is integrally formed the reverse rotation sun gear 144, all rotate in direction A. The reverse rotation planetary gear 158, meshed with the reverse rotation sun gear 144, rotates in direction B, and the reverse rotation ring gear 160, meshed with the outside of the reverse rotation planetary gear 158, rotates in direction B. Since the reverse rotation ring gear 160 is connected to the output shaft 138 via the spline 162S, the output shaft 138 rotates in direction B which is opposite to the input shaft 12.

Next, the second embodiment of the present invention is described.

In the second embodiment 200 of the present invention, the structure and operation method of the speed change controlling system is the same as the speed change controlling system 10 of the first embodiment; therefore, a description of the structure and operation method of the speed change controlling system 10 is omitted and the differences in the construction between the speed change system 210 of the second embodiment and that of the first embodiment will be explained first by comparing them.

The speed change system 210 of the continuously variable transmission of the second embodiment of the present invention is constructed as shown in Fig. 7. Reviewing the construction in comparison with the first embodiment, the output ring gear 214 having an axial bore 234 formed therein to receive therein a portion of the third section 12C of the input shaft 12 to enable independent rotation of said output ring gear 214 about the third section 12C of the input shaft, with the output ring gear 214 terminating in an output shaft 138. That is, the output ring gear 214 is integrally formed with the output shaft 138 and, in addition, meshes with the outside of the first planetary gear 212.(In the first embodiment, the carrier 124 and the output shaft 138 are integrally formed). Since the forward rotation clutch 218 is installed for forward rotation between the reverse rotation carrier 216 and the clutch connecting plate 82, there is no forward rotation ring gear which exists in the first embodiment. Furthermore, since the reverse rotation brake 222 is installed for reverse rotation at the outside of the reverse rotation carrier 216, a separate planetary gear device for reverse rotation is not necessary as in the first embodiment.

Reviewing the rest of the construction, the reverse rotation carrier 226 is installed on the third section 12C of the input shaft 12 via a bearing 226B to permit independent rotation. The reverse rotation carrier 216 is rotatably installed on the connecting shaft 34 via a bearing 216B so as to permit independent rotation, and at least one locking pin 228 interconnects the two carriers 216,226 to permit the carriers 216, 226 to rotate simultaneously. The first planetary gear 212 and the second planetary gear 230, which are integrally formed, are rotatably installed on the locking pin 228 with a recess 232 formed between the gears 212,230, and bearings 212B, 230B inserted to permit the composite planetary gears 212,230 to rotate freely about the locking pin 228. Bearing 236B is inserted into the axial bore 234 between the output ring gear 214 and the third section 12C of the output shaft 12 for free rotation.

The operation method and power transmission process for each speed change state (neutral, forward rotation, reverse rotation) of the continuously variable transmission of the second embodiment of the present invention are as follows.

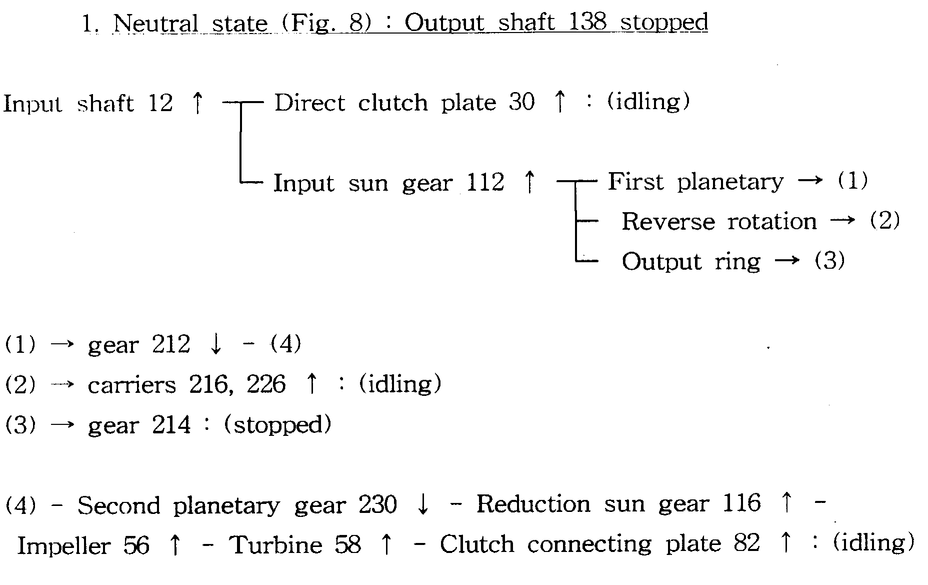

The neutral state is a state in which the direct clutch 52, the forward rotation clutch 218 and the reverse rotation brake 222 are all concurrently released, such that the power of the engine cannot rotate the output shaft 138, as shown in Fig. 8.

That is, if a load is applied to the output shaft 138, the output ring gear 214 (integrally formed with the output shaft 138), is stopped, and if the power of the engine is input, the input shaft 12 rotates, so that the direct clutch plate 30 (integrally connected to the input shaft 12), idles due to the release of the direct clutch 52, the input sun gear 112 rotates in direction A, the first planetary gear 212, meshed with the input sun gear 112, rotates in direction B, and the second planetary gear 230, integrally formed with the first planetary gear 212, also rotates in direction B. The reverse rotation carriers 216,226 idle in direction A since the forward rotation clutch 218 and the reverse rotation brake 222 are released.

The reduction sun gear 116, meshed with the second planetary gear 230, rotates in direction A, the connecting shaft 34, integrally formed with the reduction sun gear 116, also rotates in direction A, and the impeller housing 42 rotates in direction A due to the one-way clutch 48 installed between the connecting shaft 34 and the impeller housing 42. Also the impeller 56, integrally formed with the impeller housing 42, rotates in direction A.

Turbine 58, facing the impeller 56, rotates in direction A due to the flow of the fluid, the control shaft 38 (connected to the turbine 58) and the clutch connecting plate 82 (connected to the control shaft 38) rotate in direction A, but are idle due to the release of the forward rotation clutch 218.

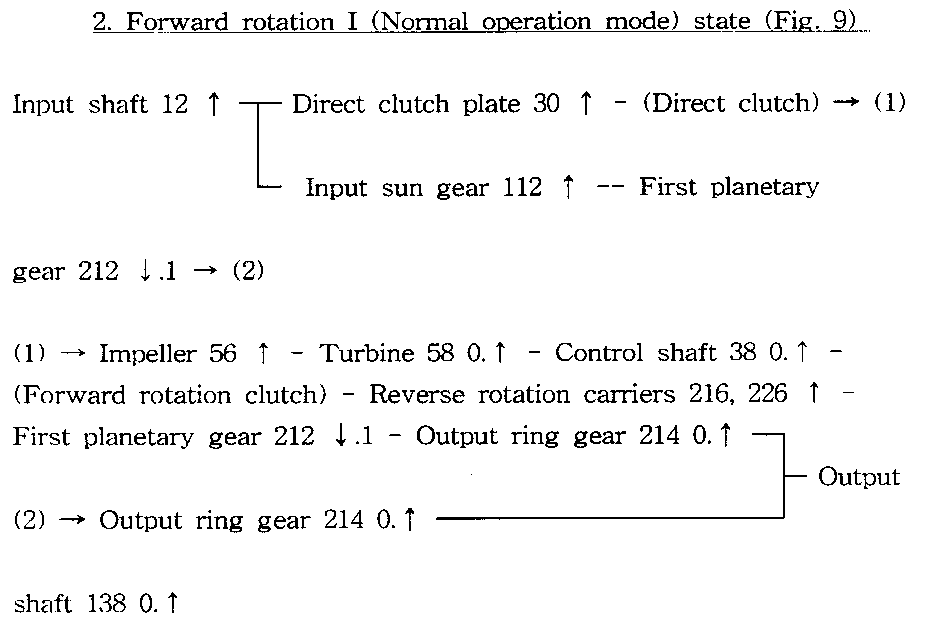

If, in the neutral state (Fig. 8), the direct clutch 52 and the forward rotation clutch 218 are both concurrently actuated, the impeller housing 42 rotates in direction A, the same rotational direction as the input shaft, due to the actuation of the direct clutch 52 connecting the direct clutch plate 30 of the input shaft to the impeller housing 42.

On the other hand, the input sun gear 112, integrally formed with the input shaft 12, rotates in direction A, the same as that of the input shaft 12, and the first planetary gear 212, meshed with the input sun gear 112, rotates in direction B. The second planetary gear 230, integrally formed with the first planetary gear 212, rotates in direction B. The reduction sun gear 116, meshed with the second planetary gear, rotates in direction A, and also the connecting shaft 34, connected to the reduction sun gear 116 rotates in direction A. The revolutions of the reduction sun gear are always lower than those of the input sun gear, and the revolutions of the impeller housing 42 connected to the input shaft 12 are always higher than those of the connecting shaft 34, therefore, the connecting shaft 34 always idles due to the one-way clutch 48.

In the neutral state, the turbine 58 facing the impeller 56 idles in direction A, the same as that of the impeller 56, and the reverse rotation carriers 216,226 idle in direction A at the fixed ratio of the planetary gear due to the stopping of the output ring gear 214. In this state, if the forward rotation clutch 218 is actuated, since the load on the output shaft 138 exerts a resistance to the turbine 58 through the reverse rotation carriers 216,226 so as to restrain the rotation of the turbine to generate a large difference in the revolutions between the impeller 56 and the turbine 58, the rotational force of the impeller is increased and transmitted to the turbine. When the rotational force of the turbine 58 is greater than the resistance exerted on the turbine by the load on the output shaft 138, the output shaft 138 is driven. This is the low speed starting state.

The process of stepless speed change from low speed to the high speed is omitted since it is the same as that for the forward rotation I state (normal operation mode) of the first embodiment.

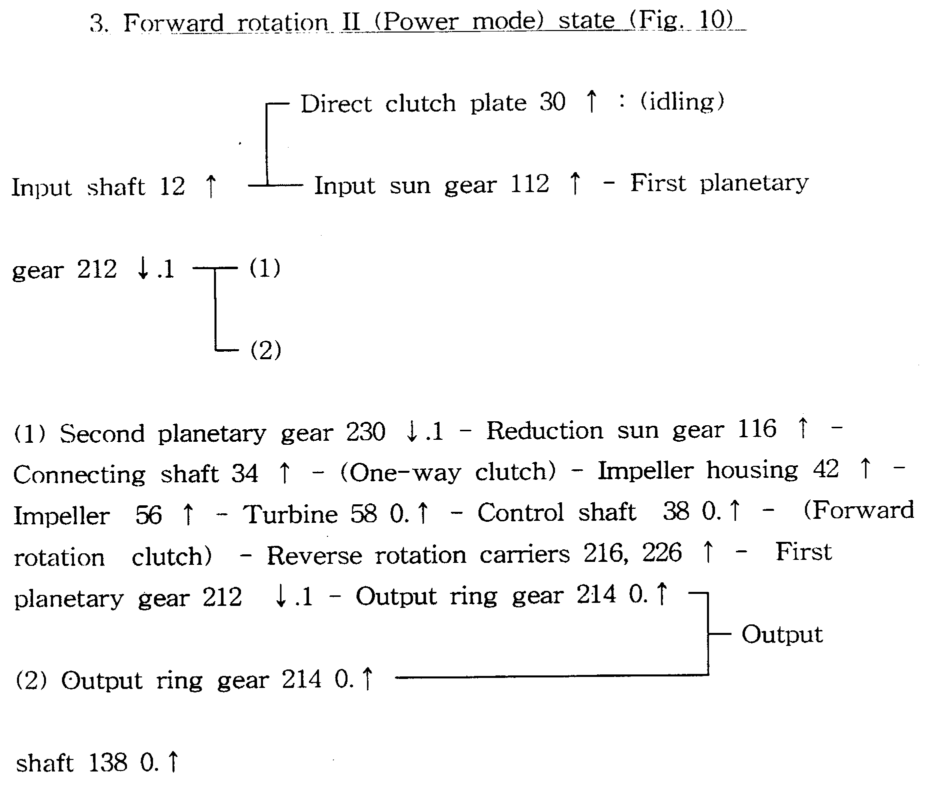

If the forward rotation clutch 218 is actuated or the forward rotation clutch 218 and the power mode clutch 44 are simultaneously actuated in the neutral state, the state is changed to that of the power mode. When compared with the above described state of normal operation mode of forward rotation I, although the rotational direction and the stepless speed change process of each part is the same, the power transmission path to the impeller is different. Due to the release of the direct clutch 52, the direct clutch plate 30 connected to the input shaft 12 idles and the connecting shaft 34, integrally formed with the reduction sun gear 116, transmits the rotational force to the impeller housing 42 in direction A through the one-way clutch 48 (or actuation of the power mode clutch 44).

The process and operation of stepless speed change is the same as the above described normal operation mode of forward rotation I.

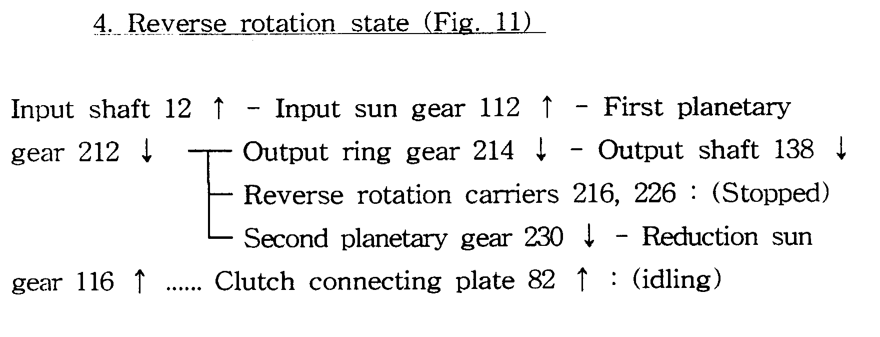

The construction of the reverse rotation of the present embodiment has no separate planetary gear for reverse rotation. However, a reverse rotation brake 222 is installed on the reverse rotation carrier 216. If the reverse rotation brake 222 is actuated when in the neutral state, the state is changed to that of the reverse rotation of the output shaft.

If the rotational power of the engine is input to the input shaft 12, the input sun gear 112, integrally connected to the input shaft 12, rotates in direction A, the same direction as the input shaft 12, and the first planetary gear 212, meshed with the input sun gear 112, rotates in direction B opposite to the input sun gear 112. If the reverse rotation carriers 216, 226 are stopped by the actuation of the reverse rotation brake 222, the output ring gear 214, meshed with the first planetary gear 212, rotates in direction B, which is the same as the first planetary gear, and the output shaft 138, integrally formed with the output ring gear 214, also rotates in direction B due to the characteristics of the planetary gear. The second planetary gear 230, integrally formed with the first planetary gear 212, rotates in direction B, and the reduction sun gear 116, meshed with the second planetary gear, rotates in direction A. The rotation of the reduction sun gear 116 is transmitted to the clutch connecting plate 82, and the clutch connecting plate 82 idles in direction A since the forward rotation clutch 218 is released.

The power transmitted to the reverse rotation carrier 216 from the clutch connecting plate 82 is disconnected by the release of the forward rotation clutch 218 to attain reverse rotation of the output shaft. This is different than the first embodiment in which the speed change ratio varies steplessly in the reverse rotation state. Therefore, if the reverse rotation carrier 216 is fixed by the actuation of the reverse rotation brake 222, the ratio of revolutions of the input to output becomes a fixed ratio established by the gear ratio of the planetary gear set 112, 212, 214.

The third embodiment of the present invention is described below. In the third embodiment 300 of the continuously variable transmission of the present invention, the structure and operation method of the speed change controlling system is the same as the speed change controlling system 10 of the first embodiment, therefore, a description of the structure and operation method of the speed change controlling system 10 is omitted, and only the speed change system 310 will be described in detail.

As shown in Fig. 12A, the input sun gear 112 is integrally formed between the second section 12B and the third section 12C of the input shaft 12 which receives rotational power from the engine. The hollow connecting shaft 34 is rotatably and coaxially installed on the second section 12B of the input shaft, and the reduction sun gear 116 is integrally formed at one end 34B of the connecting shaft 34. Bearings 36B,36B' are inserted between the input shaft 12 and the connecting shaft 34 to permit independent rotation about each other.

The hollow control sun gear shaft 312 is coaxially and rotatably installed on the connecting shaft 34 on the left side (viewed from Fig. 12A) of the reduction sun gear 116, and a control sun gear 316 is integrally formed at one end 314 of the control sun gear shaft 312. Bearings 312B,312B' are inserted between the control sun gear shaft 312 and the connecting shaft 34 to permit independent rotation about each other. The clutch connecting plate 320 is integrally connected by a spline 320S to the opposite end 318 of the control sun gear shaft. The one-way clutch 322 is installed at the periphery of the clutch connecting plate 320, and the forward rotation brake 324 is installed at the outside of the one-way clutch 322. The forward rotation clutch 328 is installed between the clutch connecting plate 320 and the clutch connecting plate 82.

Carrier 332 is rotatably positioned on the control sun gear shaft 312, and a bearing 332B is inserted between the control sun gear shaft and the carrier 332 to permit independent rotation about each other. In addition, carrier 334 is rotatably positioned on the third section 12C of the input shaft 12, and a bearing 334B is inserted between the input shaft and the carrier 334 so that they can independently rotate about each other. A plurality of locking pins 336,338 interlink the two carriers 332,334 so that they can rotate together. (Two for each are installed in the present embodiment, refer to Fig. 12B).

At least one first differential gear 340 and one third differential gear 342, integrally formed with the first differential gear 340, are rotatably positioned on each locking pin 336, and bearings 340B,340B' are inserted so that the composite differential gears 340,342 can rotate independently about the locking pin 336. The input sun gear 112 meshes with the inside of the first differential gear 340 (Fig. 12B), and the reduction sun gear 116 meshes with a portion of the third differential gear 342. In addition, at least one second differential gear 344 and fourth differential gear 346, integrally formed with the second differential gear 344, are rotatably positioned on locking pin 338, and bearings 344B,344B' are inserted so that the composite differential gears 344,346 can independently rotate about locking pin 338. The second differential gear 344 meshes with a part of the third differential gear 342 (Fig. 12B), and the control sun gear 316 meshes with the inside of the fourth differential gear 346.

A spacer 348 is installed on the left side of the first and third differential gears 340,342 on the locking pin 336 and a spacer 350 is installed on the right side of the second and fourth differential gears 344, 346, each differential gear can be prevented from moving axially, as see Fig. 12A.

Recess 352 is formed between the first differential gear 340 and the third differential gear 342, and also a recess 354 is formed between the second differential gear 344 and the fourth differential gear 346. Output ring gear 356, integrally formed with the output shaft 138, includes an axial bore 356A (see Fig. 12A) for receiving therein the third section 12C of the input shaft 12 such that the output ring gear 356 meshes with the outside of the first differential gear 340, and a bearing 358B is inserted between the third section 12C of the output shaft 12 and the output ring gear 356 so that they can independently rotate about each other. The reverse rotation brake 358 applies a braking force to the carrier 332 in order to effect reverse rotation driving, i.e. backing up, as see Fig. 16.

The method of operation and power transmission process for each speed change state (neutral, forward rotation, reverse rotation) of the continuously variable transmission of the third embodiment of the present invention is described, as follows.

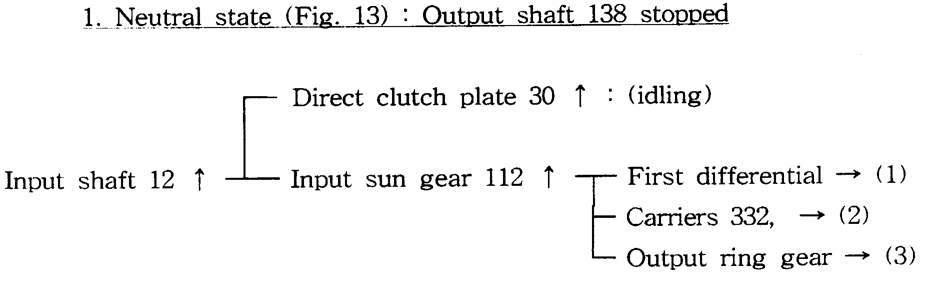

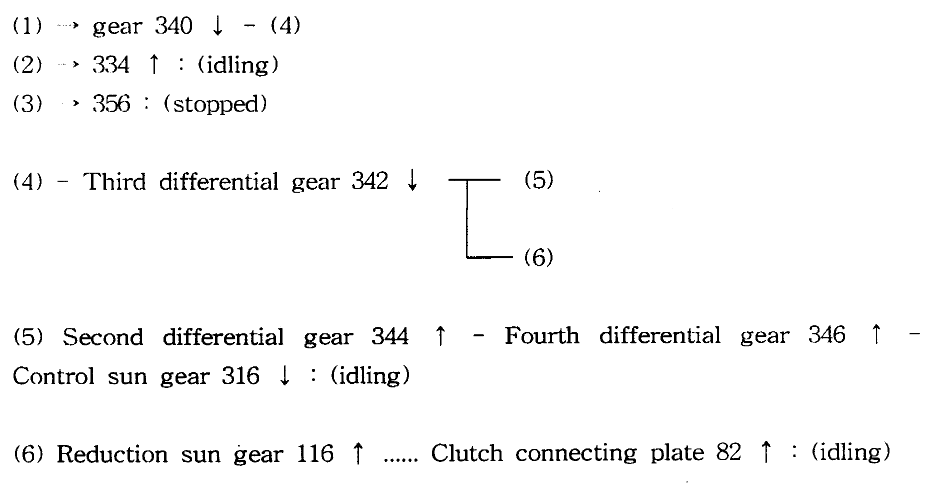

The neutral state is a state in which the direct clutch 52, the forward rotation clutch 328, the forward rotation brake 324 and the reverse rotation brake 358 are all concurrently released, with the result that the power of the engine cannot rotate the output shaft 138, which can only idle, as shown in Fig. 13.

That is, if a load is applied to the output shaft 138, the output ring gear 356, integrally formed with the output shaft 138, is stopped. If rotational power of the engine rotates the input shaft 12 the direct clutch plate 30, integrally connected to the input shaft 12, idles due to the release of the direct clutch 52. Here the input sun gear 112, integrally formed with the input shaft, rotates in direction A, which is the same as the input shaft 12, and the first differential gear 340, meshed with the input sun gear 112, rotates in direction B, and the third differential gear 342, integrally formed with the first differential gear, also rotates in direction B. The second differential gear 344 meshed with the third differential gear 342 rotates in direction A, and the fourth differential gear 346, integrally formed with the second differential gear, also rotates in direction A.

Since the forward rotation clutch 328 and the forward rotation brake 324 are in a released state, the control sun gear 316, meshed with the fourth differential gear 346, idles in direction B. The reduction sun gear 116, meshed with the third differential gear 342, rotates in direction A, and the connecting shaft 34, integrally formed with the reduction sun gear, also rotates in direction A. The impeller housing rotates in direction A because of the one-way clutch 48 installed between the connecting shaft 34 and the impeller housing 42, and the impeller 56, integrally formed with the impeller housing 42, rotates in direction A. The turbine 58 rotates in direction A due to the impeller, and the clutch connecting plate 82 and the control shaft 38, connected with the turbine idle, in direction A due to the release of the forward rotation clutch 328.

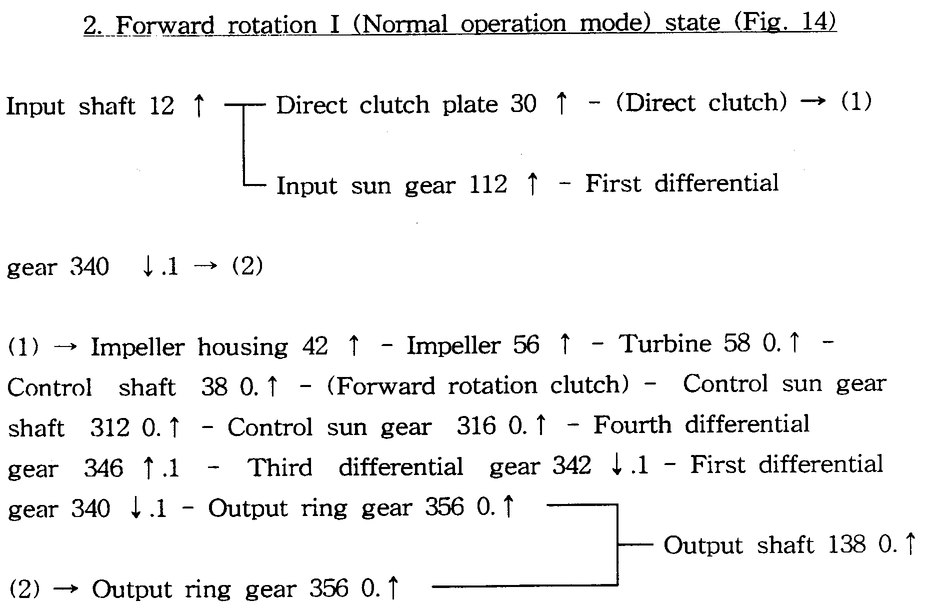

If, in the neutral state (Fig. 13), the direct clutch 52, the forward rotation clutch 328 and the forward rotation brake 324 are all concurrently actuated, the direct clutch plate 30 connected to the input shaft 12, the impeller housing 42 and the impeller 56 rotate in the same direction, direction A, and at the same number of revolutions as the input shaft.

Input sun gear 112, integrally formed with the input shaft 12, rotates in direction A. The first differential gear 340, meshed with the input sun gear 112, rotates in direction B, and the carriers 332,334 revolve in direction A. The third differential gear 342, integrally formed with the first differential gear 340, rotates in direction B. The second differential gear 344, meshed with the third differential gear 342, rotates in direction A, and the fourth differential gear 346, integrally formed with the second differential gear 344, also rotates in direction A. The reduction sun gear 116, meshed with the third differential gear 342, rotates in direction A, and the connecting shaft 34, integrally formed with the reduction sun gear 116, idles due to the one-way clutch in direction A since the revolutions of the reduction sun gear are always smaller than or equal to those of the impeller housing 42 (connected to the input shaft 12).

Reviewing the initial low speed starting state, if, in the neutral state (the output ring gear 356 is stopped due to the load on the output shaft 138, and the control sun gear 316 idles in direction B, the direct clutch 52, the forward rotation clutch 328 and the forward rotation brake 324 all are concurrently actuated, the control sun gear 316 is restrained from rotation in direction B and momentarily stops due to the one-way clutch 322 installed between the clutch connecting plate 320 and the forward rotation brake 324. At this time, the control sun gear 316 is subject to resistance due to the load on the output shaft 138. The speed change ratio of the input to output is established as a fixed ratio by the input sun gear 112, first differential gear 340, camers 332, 334 and the output ring gear 356. Also, the turbine 58, connected to the control sun gear 316, is subject to resistance and momentarily comes to the stop by the actuation of the forward rotation clutch 328. At this time, a difference in the revolutions between the impeller 56 and the turbine 58 takes place, and the rotational force of the impeller is increased by the difference in revolutions and transmitted to the turbine. If the rotational force of the turbine 58 is in equilibrium with the resistance of the output shaft, the output shaft 138 is driven. This state is referred to as the low speed starting state.

Since the process of stepless speed change from the low speed state to the high speed state is identical with the first embodiment, a description thereof is omitted.

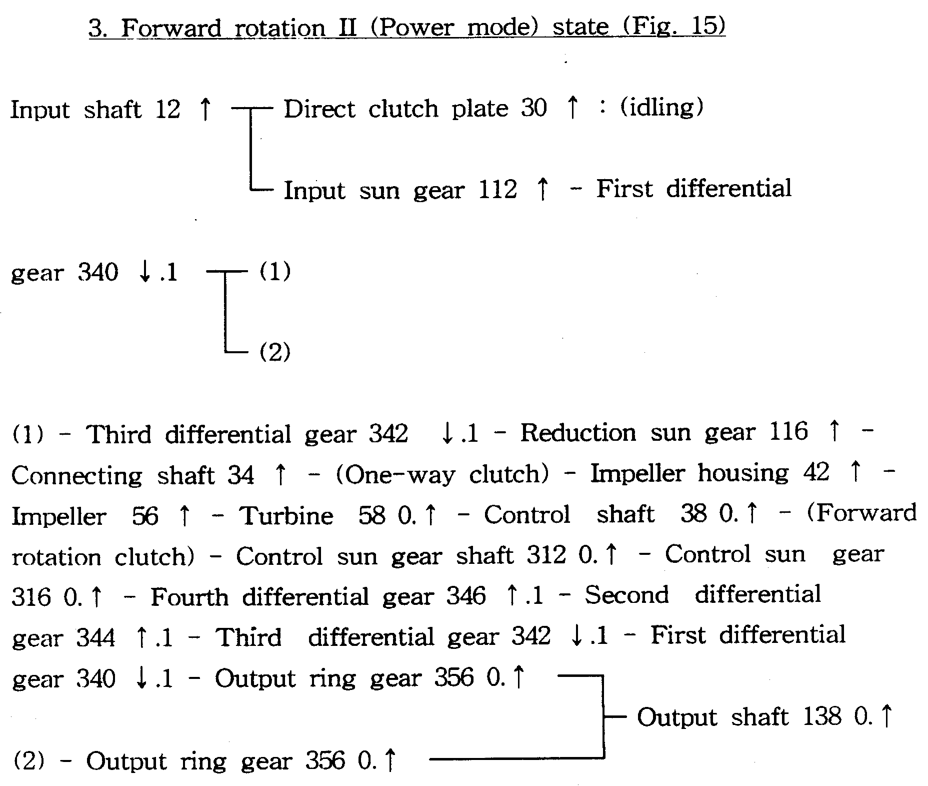

If the forward rotation brake 324 and the forward rotation clutch 328 are both concurrently actuated in the neutral state, the state is changed to the power mode. When compared with the above described state of normal operation mode of forward rotation I, although the rotational direction and the stepless speed change process of each part is the same, the power transmission to the impeller 56 is different. The direct clutch plate 30, connected to the input shaft 12, idles due to the release of the direct clutch 52, and the rotation decreased (that is, the rotational force is increased) by the third differential gear 342 and reduction sun gear 116 is transmitted to the impeller via one-way clutch 48 through the connecting shaft 34.

The process and operation of stepless speed change is the same as the above described normal operation mode of forward rotation I.

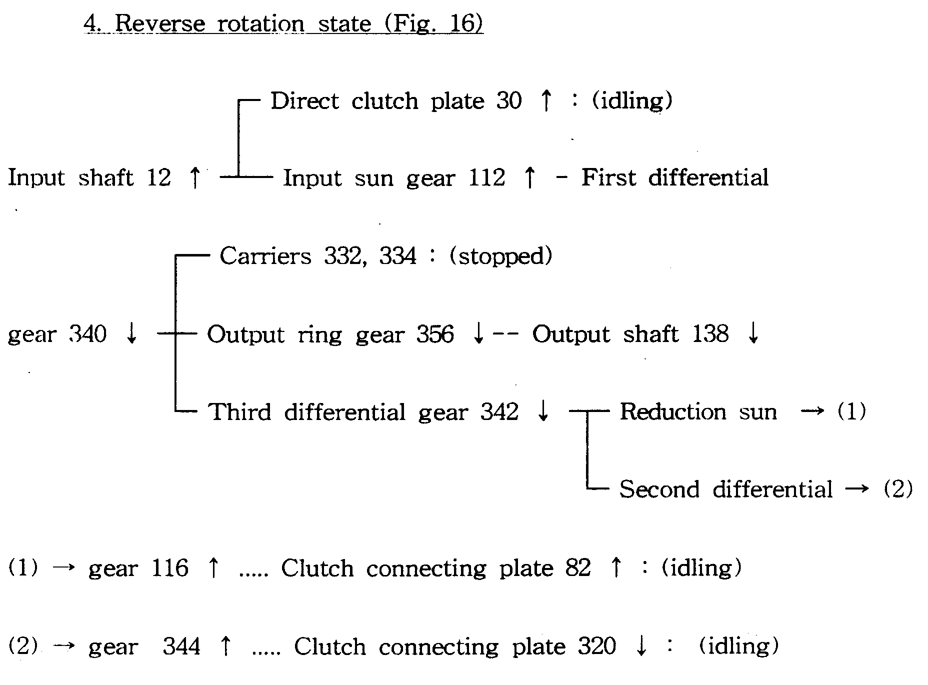

The construction of the reverse rotation of the present embodiment has no separate planetary gear for reverse rotation but rather utilizes the reverse rotation brake 358 installed on the reverse rotation carrier 332. If the reverse rotation brake 358 is actuated in the neutral state, the state is changed to the reverse rotation state.

If the rotational power of the engine is input to the input shaft 12, the input sun gear 112, integrally connected to the input shaft, rotates in direction A, the same direction as the input shaft; the first differential gear 340, meshed with the input sun gear, rotates in direction B, and the carriers 332, 334 are stopped by the actuation of the reverse rotation brake 358, therefore, the output ring gear 356, meshed with the outside of the first differential gear 340, rotates in direction B, which is opposite to the direction of the rotation of the input shaft, and the output shaft 138, integrally formed with the output ring gear, also rotates in direction B.

The direct clutch plate 30, connected to the input shaft 12, idles in direction A; the second differential gear 344, meshed with the third differential gear 342, rotates in direction A; the fourth differential gear 346, integrally formed with the second differential gear, also rotates in direction A; and the control sun gear 316, meshed with the fourth differential gear, idles while rotating in direction B. The reduction sun gear 116 (meshed with the third differential gear 342) rotates in direction A; and the control shaft 34 (integrally formed with the reduction sun gear), the impeller housing 42 (connected to the connecting shaft by the one-way clutch 48), the impeller 56 (integrally formed with the impeller housing), the turbine 58 (installed facing the impeller), the control shaft 38 (connected to the turbine), and the clutch connecting plate 82 (connected to the control shaft) all idle, while rotating in direction A.

Next, the fourth embodiment of the present invention is described.

In the fourth embodiment 400 of the continuously variable transmission of the present invention, the structure and operation method of the speed change controlling system is the same as that of the speed change controlling system 10 of the first embodiment, therefore, a description of the structure and operation method of the speed change controlling system 10 is omitted, and only the speed change system 410 is described below.

The biggest differences, when compared with the third embodiment 300, are that the output shaft 138 is integrally formed with the carrier 424, and the reverse rotation brake 450 is installed at the reverse rotation ring gear 448. As shown in Fig. 17, the input shaft 12, with the input sun gear 112 integrally formed between the second section 12B and the third section 12C of the input shaft 12, is utilized. The connecting shaft 34 is rotatably and coaxially positioned on the second section 12B of the input shaft. The connecting shaft includes a reduction sun gear 116, integrally formed at one end 34B of the connecting shaft, with the bearings 36B,36B' inserted between the input shaft 12 and the connecting shaft 34 to permit independent rotation about each other. This construction is the same as in the third embodiment.

The hollow control sun gear shaft 412 is rotatably and coaxially installed on the connecting shaft 34 to the left (when viewing Fig. 17) of the reduction sun gear 116. The control sun gear 416, integrally formed at one end 414 of the control sun gear shaft 412, with bearings 412B,412B' inserted between the control sun gear shaft 412 and the connecting shaft 34 to permit independent rotation about each other. The clutch connecting plate 420 is integrally connected by a spline 420S to the opposite end 418 of the control sun gear shaft 412. Carrier 422 is installed on the control sun gear shaft 412 to the left of the control sun gear 416 (when facing Fig. 17) with a bearing 422B inserted between them to enable independent rotation. Carrier 424, integrally formed with the output shaft 138, is installed on the third section 12C of the input shaft 12, with a bearing 426B inserted between the carrier 424 and the third section 12C of the input shaft to permit independent rotation about each other.

A plurality of locking pins 428,430 interlink and are secured to the two carriers 422,424 so that they can rotate together. At least one, first differential gear 432 and at least one, third differential gear 434, integrally formed with the first differential gear 432, are rotatably installed on the locking pin 428, and at least one, second differential gear 436 and fourth differential gear 438, integrally formed with the second differential gear 436, are rotatably installed on the locking pin 430.

To ensure that each locking pin and each differential gear can rotate independently, bearings 432B,432B' are inserted between the first and third differential gears 432,434 and the locking pin 428, and bearings 436B, 436B' are inserted between the second and fourth differential gears 436, 438 and the locking pin 430. The input sun gear 112 meshes with the inside of the first differential gear 432, the second differential gear 436 meshes with a part of the third differential gear 434, the reduction sun gear 116 meshes with the inside of other part of the third differential gear 434, and the control sun gear 416 meshes with the inside of the fourth differential gear 438.

A recess 440 spaces apart the first differential gear 432 from the third differential gear 434, a recess 442 spaces apart the second differential gear 436 and the fourth differential gear 438. In addition, spacers 444, 446 can be installed on the locking pin 428, 430, respectively, to prevent axial movement of each differential gear along the respective locking pin, as see Fig. 17.

The construction and installation method are similar to those of the third embodiment, therefore, a detailed illustration is omitted.

The reverse rotation ring gear 448 is rotatably positioned on the control sun gear shaft 412 to the left of the carrier 422 such that the reverse rotation ring gear 448 meshes with the outside of the fourth differential gear 438 with a bearing 448B inserted between the reverse rotation ring gear and the control sun gear shaft so that they can independently rotate about each other. The reverse rotation brake 450 is installed to engage the outside of the reverse rotation ring gear 448. A forward rotation brake 454 is installed at the outside of the clutch connecting plate 420. The one-way clutch 458 is operatively positioned on the clutch connecting plate 420 and the forward rotation brake 454 is operatively connected to the one-way clutch. The one-way clutch 458 prevents the control sun gear 416 from rotating in a direction opposite to that of the input shaft 12 at the time of the actuation of the forward rotation brake 454. The forward rotation clutch 460 is installed between the clutch connecting plate 420 and the clutch connecting plate 82.

The operation method and power transmission process for each speed change state (neutral, forward rotation, reverse rotation) of the continuously variable transmission of the present embodiment are described as follows.

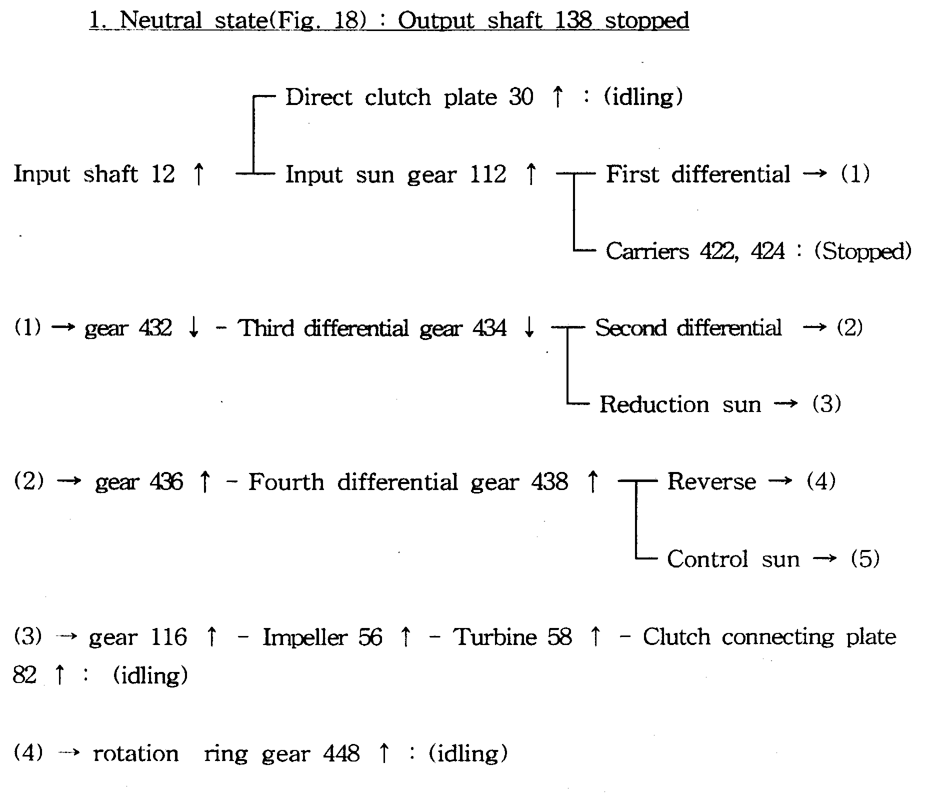

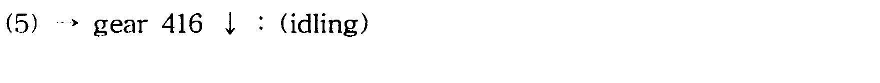

The neutral state is a state in which the direct clutch 52, the power mode clutch 44, the forward rotation clutch 460 and the reverse rotation brake 450 are all concurrently released, such that the rotational power of the engine cannot rotate the output shaft 138, which only idles as shown in Fig. 18.

That is, if a load is applied to the output shaft 138, carrier 424 (integrally formed with the output shaft) and carrier 422 are stopped. If rotational power from the engine is input, the direct clutch plate 30, connected to the input shaft 12 idles, the input sun gear 112, integrally formed with the input shaft, rotates in direction A, the same as the input shaft, and the first differential gear 432, meshed with the input sun gear 112, rotates in direction B, opposite to that of the input shaft. The third differential gear 434, integrally formed with the first differential gear, also rotates in direction B, the second differential gear 436, meshed with the third differential gear, rotates in direction A, and the fourth differential gear 438, integrally formed with the second differential gear, also rotates in direction A. The control sun gear 416, meshed with the inside of the fourth differential gear, idles in direction B due to the release of the reverse rotation brake 450 and the forward rotation clutch 460. The reduction sun gear 116, meshed with the inside of the third differential gear 434, rotates in direction A, and the connecting shaft 34, connected to the reduction sun gear, the impeller 56, the turbine 58, the control shaft 38 and the clutch connecting plate 82 all idle in direction A.

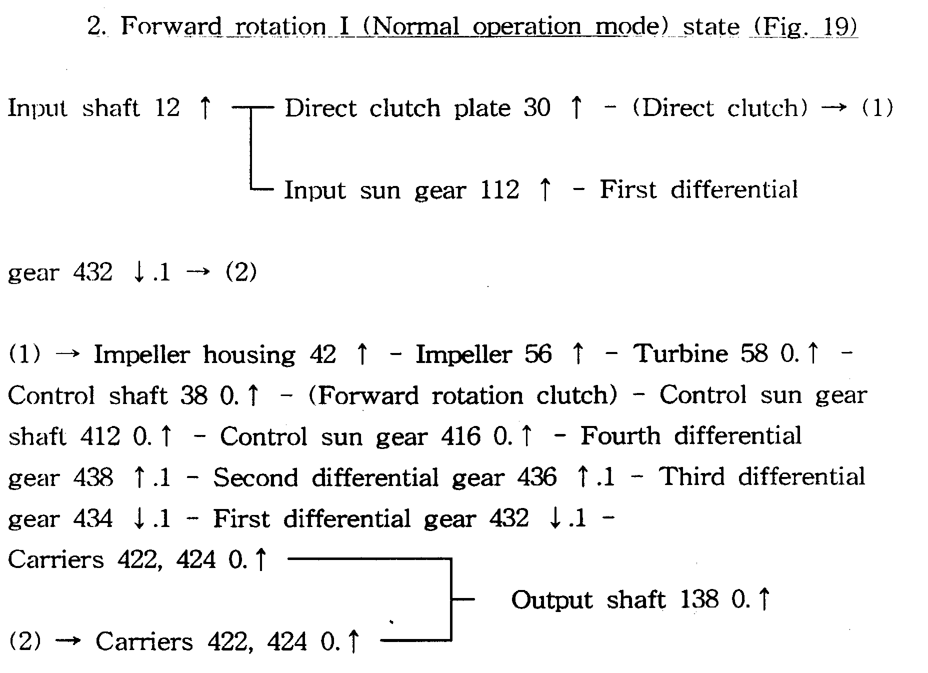

If, in the neutral state (Fig. 18), the direct clutch 52, the forward rotation clutch 460, and the forward rotation brake 454 are all concurrently actuated, the direct clutch plate 30, connected to the input shaft 12, the impeller housing 42 and the impeller 56 rotate in direction A, the same as the input shaft 12.

The input sun gear 112, integrally formed with the input shaft 12, also rotates in direction A. The first differential gear 432, meshed with the input sun gear 112, rotates in direction B, and the third differential gear 434, integrally formed with the first differential gear, also rotates in direction B. The second differential gear 436, meshed with the third differential gear 434, rotates in direction A, and the fourth differential gear 438, integrally formed with the second differential gear, rotates in direction A. The reduction sun gear 116, meshed with the inside of the third differential gear 434, rotates in direction A; and the connecting shaft 34, integrally formed with the reduction sun gear 116, idles in direction A due to the one-way clutch since the revolutions of the reduction sun gear 116 are always smaller than or equal to those of the impeller housing 42 (connected to the input shaft).

Reviewing the initial low speed starting state, if, in the neutral state (carriers 422,424 are stopped due to a load on the output shaft 138, and the control sun gear 416 idles in direction B), the direct clutch 52, the forward rotation clutch 460, and the forward rotation brake 454 are all concurrently actuated, the control sun gear 416 is restrained from its rotation in direction B and momentarily comes to a stop via the one-way clutch 458 installed between the clutch connecting plate 420 and the forward rotation brake 454. (At this time, the control sun gear 416 is subject to the resistance due to the load on the output shaft 138.) The speed change ratio of the input to the output at this momentary stop state is established as a fixed ratio by the input sun gear 112, the first differential gear 432, the second differential gear 436, the fourth differential gear 438 and the control sun gear 416, whereby the output shaft 138 has a constant number of revolutions. Also, the turbine 58 and the control sun gear 416 are connected by the actuation of the forward rotation clutch 460 and the rotation of the turbine is momentarily stopped. At this time, a difference in revolutions between the impeller 56 and the turbine 58 is generated and the rotational force of the impeller is increased by the difference in revolutions and transmitted to the turbine. The rotational force of the turbine is combined with the rotational force generated by the fixed ratio established at the differential gear device at the time of the momentary stopping of the control sun gear 416 and is transmitted to the output shaft. When the rotational force of the turbine is in equilibrium with the load on the output shaft, the output shaft is driven. This state is referred to as the low speed starting state.

Since the process of stepless speed change from the low speed state to the high speed state is identical to the first embodiment, a description thereof is omitted.

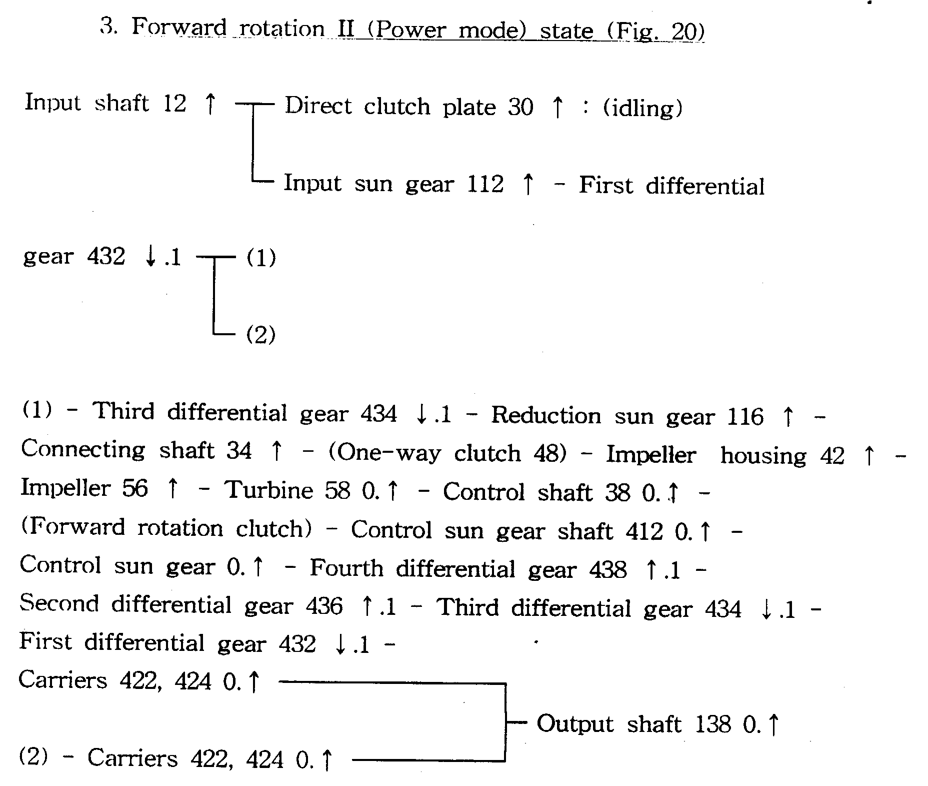

As shown in Fig. 20, if the forward rotation brake 454 and the forward rotation clutch 460 are both concurrently actuated in the neutral state, the state changes to the power mode state. When compared with the above described state of normal operation mode of forward rotation I, although the rotational direction and the stepless speed change process of each part is the same, the power transmission to the impeller is different. The direct clutch plate 30, connected to the input shaft 12, idles due to the release of the direct clutch 52, and the rotation decreased (that is, the rotational force is increased) by the third differential gear 434 and reduction sun gear 116 is transmitted to the impeller by the one-way clutch 48 through the connecting shaft 34.

The process and operation of stepless speed change is the same as the above described normal operation mode of forward rotation I.

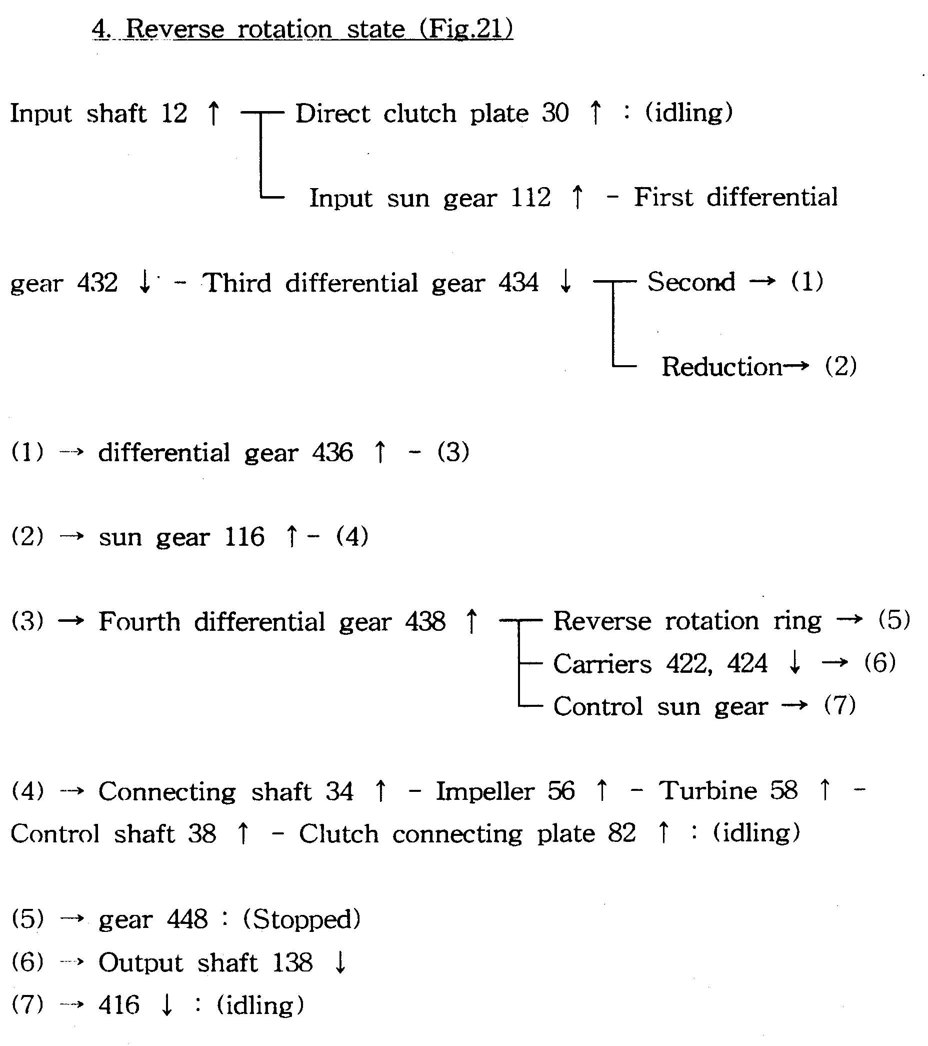

As shown in Fig. 21, if the reverse rotation brake 450 is actuated in the neutral state, the state changes to the reverse rotation state. If the rotational power of the engine is input to the input shaft 12, the input sun gear 112 rotates in direction A, which is the same direction as the input shaft, the first differential gear 432, meshed with the input sun gear 112, rotates in direction B, and the third differential gear 434, integrally formed with the first differential gear, also rotates in direction B. The second differential gear 436, meshed with the third differential gear, rotates in direction A, and the fourth differential gear 438, integrally formed with the second differential gear, also rotates in direction A. Since the reverse rotation ring gear 448, meshed with the outside of the fourth differential gear, is fixed by the reverse rotation brake 450, the carriers 422,424 rotate in direction B, and the output shaft 138, integrally formed with the carriers, also rotates in direction B. The control sun gear 416, meshed with the inside of the fourth differential gear 438, idles in direction B, and the reduction sun gear 116, meshed with the inside of the third differential gear 434, also idles together with the connecting shaft 34, the impeller 56, the turbine 58 and the control shaft 38.

Next, the fifth embodiment of the present invention is described.

Also in the fifth embodiment 500 of the continuously variable transmission of the present invention, the structure and operation method of the speed change controlling system is the same as the speed change controlling system 10 of the first embodiment, therefore, a description of the speed change controlling system 10 is omitted, and only the speed change system 510 will be described in detail.

As shown in Fig. 22, the structure of the fifth embodiment includes the input shaft 12, the input sun gear 112, integrally formed on the input shaft 12, the hollow connecting shaft 34, the reduction sun gear 116 integrally formed on the hollow connecting shaft 34, and bearings 36B,36B' inserted between the input shaft and the connecting shaft as in the above described embodiment.

The hollow control carrier shaft 512 is rotatably and coaxially installed on the connecting shaft 34 on the left side (when viewing Fig. 22) of the reduction sun gear 116, and bearings 512B, 512B' are inserted between the control carrier shaft 512 and the connecting shaft 34 to permit independent rotation about each other. The control carrier 516 is integrally formed at one end 514 of the control carrier shaft 512. Through-hole 518 is formed in the control carrier 516 and a bearing 554B, which is described below, is inserted in hole 518. The forward rotation clutch plate 522 is integrally connected by a spline 522S to opposite end 520 of the control carrier shaft 512. The hollow reverse rotation sun gear shaft 524 is rotatably and coaxially installed on the control carrier shaft 512, and the reverse rotation sun gear 528 is integrally formed at one end 526 of the reverse rotation sun gear shaft 524. Of course, bearings 524B,524B' are inserted between the reverse rotation sun gear shaft 524 and the control carrier shaft 512 so that they can independently rotate about each other. The reverse rotation connecting plate 532 is integrally connected by a spline 532S to the opposite end 530 of the reverse rotation sun gear shaft 524.

Carrier 534 is placed on the reverse rotation sun gear shaft 524 between the reverse rotation connecting plate 532 and the reverse rotation sun gear 528, and a bearing 534B is inserted between the carrier 534 and the reverse rotation sun gear shaft 524 to permit independent rotation about each other. Carrier 536, integrally formed with the output shaft 138, is installed at the third section 12C of the input shaft 12, and a bearing 538B is inserted between the carrier 536 and the third section 12C to permit independent rotation about each other. At least one locking pin 540 is installed and fixed between two carriers 534, 536 so that the two carriers can be rotated together.

At least one first planetary gear 542, second planetary gear 544 and reverse rotation planetary gear 546, which are integrally formed, are rotatably positioned on the locking pin 540, and bearings 548B, 548B' are inserted between the locking pin and the planetary gears so that they can independently rotate about each other. A neck portion 550 is formed between the first planetary gear 542 and the second planetary gear 544, and also a neck portion 552 is formed between the second planetary gear and the reverse rotation planetary gear 546. The neck portion 552 is inserted into the through-hole 518 of the control carrier 516, and a bearing 554B is inserted between the neck portion 552 and the control carrier 516. The first planetary gear 542 is meshed with the input sun gear 112, the second planetary gear 544 is meshed with the reduction sun gear 116, and the reverse rotation planetary gear 546 is meshed with the reverse rotation sun gear 528. The forward rotation clutch 556 is installed between the forward rotation clutch plate 522 and the clutch connecting plate 82. The reverse rotation brake 560 is installed to the outside of the reverse rotation connecting plate 532.

The operation method and power transmission process for each speed change state (neutral, forward rotation, reverse rotation) of the continuously variable transmission of the fifth embodiment of the present invention is as follows.

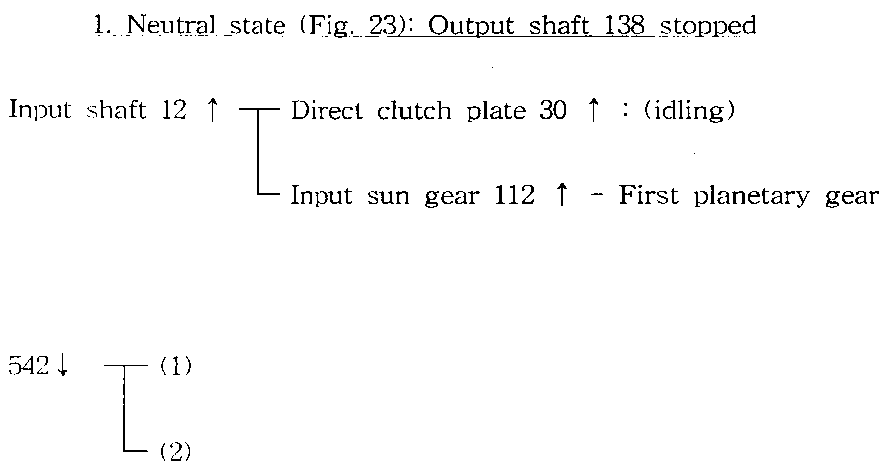

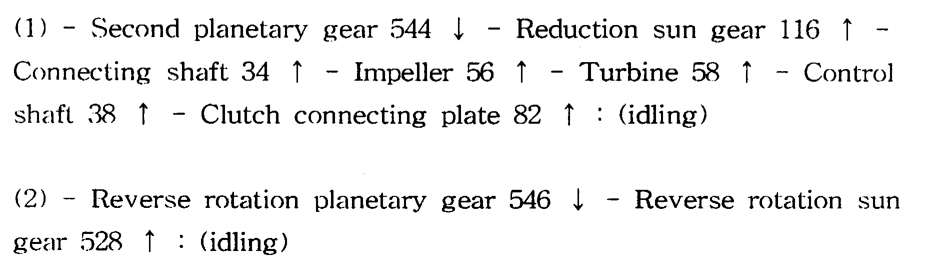

The neutral state is a state in which the direct clutch 52, the power mode clutch 44, the forward rotation clutch 556 and the reverse rotation brake 560 are all concurrently released, with the result that the rotational power of the engine cannot rotate the output shaft 138 and it only idles, as shown in Fig. 23.

That is, if a load is applied to the output shaft 138, the carrier 536 and the carrier 534, integrally formed with the output shaft 138, are stopped. If the rotational power of the engine is input, the direct clutch plate 30, integrally connected to the input shaft 12, idles and the input sun gear 112, integrally formed with the input shaft 12, rotates in direction A, which is the same as the input shaft 12. The first planetary gear 542 meshed with the input sun gear 112, rotates in direction B, opposite to the direction of the input shaft, and the second planetary gear 544 and the reverse rotation planetary gear 546, which are integrally formed with the first planetary gear 542, also rotate in direction B. The reduction sun gear 116, meshed with the second planetary gear 544, rotates in direction A, and the connecting shaft 34, connected to the reduction sun gear 116, the impeller 56, the turbine 58, the control shaft 38 and the clutch connecting plate 82, all idle. The reverse rotation sun gear 528 meshed with the reverse rotation planetary gear 546 idles in direction A.

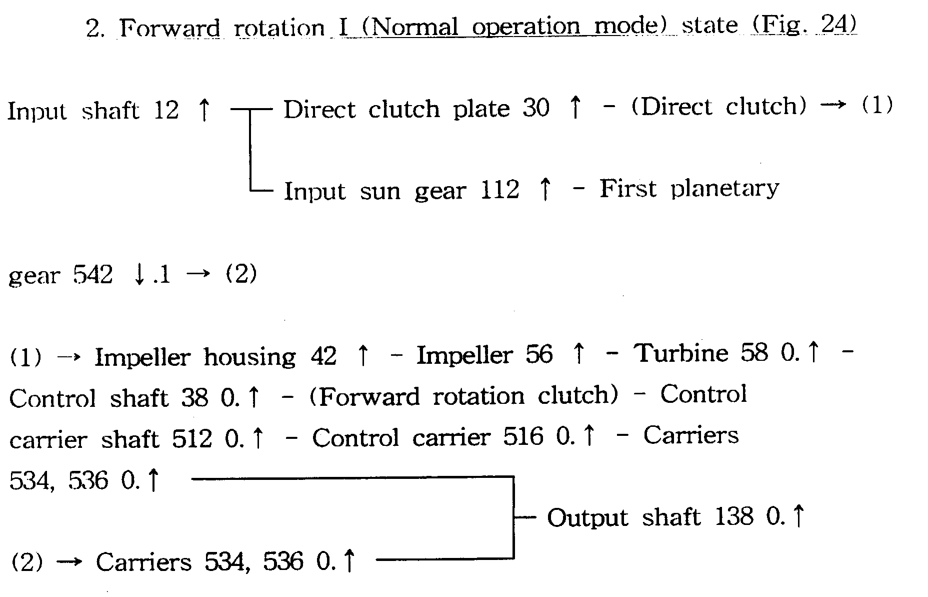

If, in the neutral state, the direct clutch 52 and the forward rotation clutch 556 are both concurrently actuated, the direct clutch plate 30, connected to the input shaft 12, the impeller housing 42 and the impeller 56 rotate in direction A, the same as the input shaft. The input sun gear 112, integrally formed with the input shaft 12, also rotates in direction A. The first planetary gear 542 meshed with the input sun gear 112 rotates in direction B, which is opposite to the direction of the input shaft, and the second planetary gear 544, integrally formed with the first planetary gear, and the reverse rotation planetary gear 546 also rotate in direction B. The reduction sun gear 116, meshed with the second planetary gear 544, and the connecting shaft 34, integrally formed with the reduction sun gear, idle in direction A. The reverse rotation sun gear 528, meshed with the reverse rotation planetary gear 546, idles in direction A due to the release of the reverse rotation brake 560.

Reviewing the process of power transmission in the initial low speed starting state, if, in the neutral state (the carriers 534,536 are stopped due to the load on the output shaft 138, and the control carrier 516 is stopped), the direct clutch 52 and the forward rotation clutch 556 are both concurrently actuated, the turbine 58 is subject to the resistance corresponding to the load on the output shaft 138 and momentarily stops since the control carrier 516 and the turbine 58 are connected by the actuation of the forward rotation clutch. At this time, a difference in revolutions between the impeller 56 and the turbine 58 occurs, and the rotational force increased more than the rotational force of the impeller by this difference in revolutions is transmitted to the turbine. When the rotational force transmitted to the turbine 58 is in equilibrium with the resistance due to the load on the output shaft, the output shaft is driven. This time is referred to as the low speed starting state.

Since the process of stepless speed change from the low speed state to the high speed state is identical to the first embodiment, a description thereof is omitted.

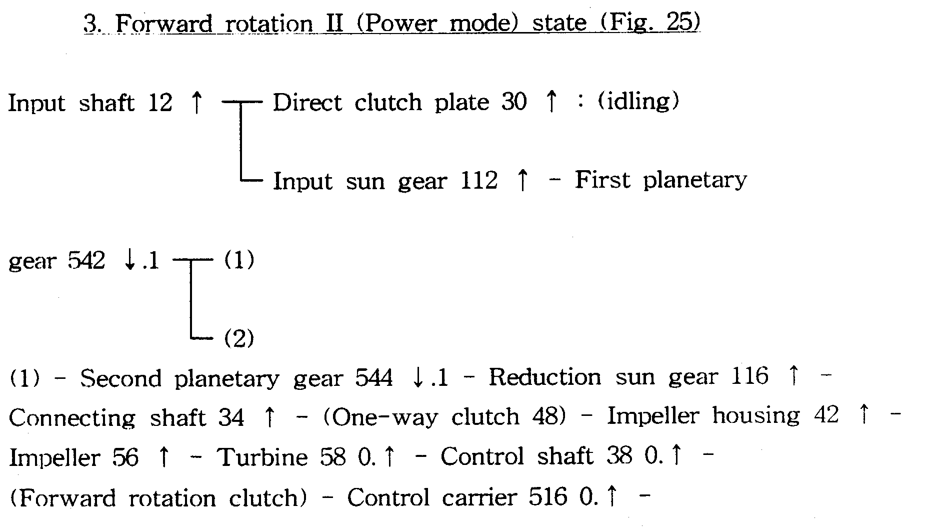

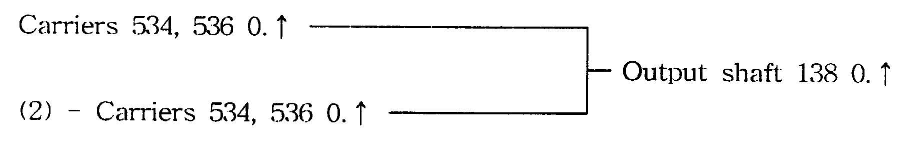

As shown in Fig. 25, if the forward rotation clutch 556 is actuated in the neutral state (Fig. 23), the state is changed to the power mode. When compared with the above described normal operation mode of forward rotation I, although the rotational direction and the stepless speed change process of each part is the same, the power transmission to the impeller 56 is different. The direct clutch plate 30, connected to the input shaft 12, idles due to the release of the direct clutch 52, and the rotation decreased (that is, the rotational force is increased) by the second planetary gear 544 and reduction sun gear 116 is transmitted to the impeller 56 by the one-way clutch 48 through the connecting shaft 34.

The process and operation of stepless speed change is same as the above described normal operation mode of forward rotation I.

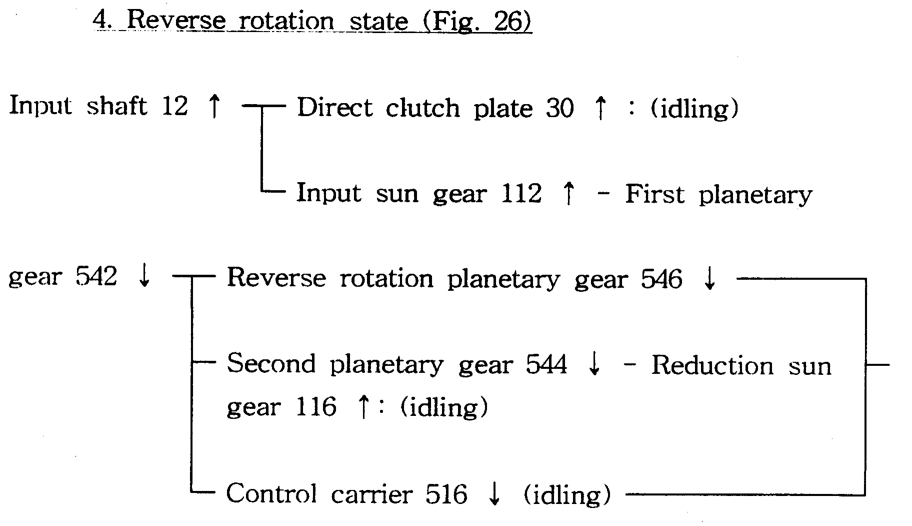

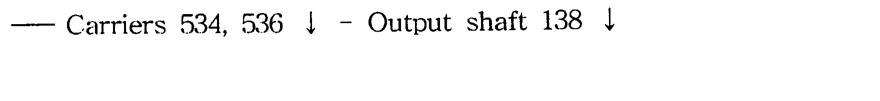

As shown in Fig. 26, if the reverse rotation brake 560 is actuated in the neutral state (Fig. 23), the reverse rotation sun gear 528 is stopped. If the rotational power of the engine is input to the input shaft 12, the direct clutch plate 30 connected to the input shaft 12 idles, the input sun gear 112, integrally connected to the input shaft 12, rotates in direction A, the same as the input shaft 12, the first- planetary gear 542 meshed with the input sun gear 112 rotates in direction B opposite to the direction of input shaft 12, and the second planetary gear 544 and the reverse rotation planetary gear 546, which are integrally formed with the first planetary gear 542, also rotate in direction B. The reduction sun gear 116, meshed with the second planetary gear 544, the connecting shaft 34, connected to the reduction sun gear 116, the impeller 56, the turbine 58 and the control shaft 38 idle in direction A. Since the reverse rotation sun gear 528, meshed with the reverse rotation planetary gear 546, is stopped by the reverse rotation brake 560, the carriers 534,536 are rotated in direction B, and the output shaft 138, integrally formed with the carrier 536, also rotates in direction B opposite to the direction of the input shaft 12. Since the forward rotation clutch 556 is released, the control carrier 516 idles in the same direction as the output shaft 138.

As described above, with the continuously variable transmission of the present invention, the power input to the input shaft even with all the gears engaged can be transmitted to the output shaft by speed-changing into the normal operation mode in which smooth and quiet feeling of driving can be obtained or into the power mode in which driving in the mountainous area, up an inclined road or rapid starting can be easily performed, and also the reverse rotation driving can be performed in a simple way.

It is obvious that the continuously variable transmission of the present invention is not limited to the present embodiments but can be applied to all the apparatuses which can speed-change the driving force and output it to the output shaft in all vehicles and industrial machines based on the gist of the present invention, and that various modification and alterations can be made within the scope of the present invention.

For instance, if the number of teeth of the gears used in the present invention is properly adjusted according to objects, the revolutions of the output shaft required for the objects can be obtained, therefore it is natural that the present invention is not limited to the size of the gears.

The construction of each embodiment is clearly and definitively shown in Fig. 2, Fig. 7, Fig. 12A, Fig. 17 and Fig. 22, and schematically shown in Fig. 27 to Fig. 31.

## Claims

1. A continuously variable transmission comprising:
(A) a speed change controlling system for receiving rotational power generated by an engine and for controlling rotational ratio in accordance with the load of an output shaft, said speed change controlling system comprises:
an input shaft (12) having a first, second and third section (12A, 12B, 12C) for receiving rotational input;
a connecting shaft (34) having a first end 34A and a second end 34B rotatably and coaxially mounted on said second section (12B) of said input shaft (12) to enable independent rotation about said second section (12B);
a control shaft (38) having a first end 38A and a second end 38B rotatably and coaxially mounted on said connecting shaft (34) to enable independent rotation about said connecting shaft (34);
a fixed shaft (62) operatively secured to prevent rotation and coaxially mounted on said control shaft (38) to enable independent rotation of said control shaft (38);
an impeller housing (42) having a first end 42A and a second end 42B, with said first end rotatably mounted on said first end of said connecting shaft 34A and said second end including an impeller (56) rotatably mounted on said fixed shaft (62);
a turbine (58) operatively positioned opposite said impeller (56) and secured to said first end (38A) of said control shaft (38);
said impeller housing operatively enclosing said turbine (58), said impeller and said stator and with said housing operatively secured to prevent rotation;
a stator (60) operatively positioned between said impeller (56) and said turbine (58);
a one-way clutch (66) to prevent reverse rotation of said stator (60);
a direct clutch plate (30) integrally formed between said first section (12A) and said second section (12B) of said input shaft 12;
a direct clutch (52) for connecting and disconnecting the rotational input from said direct clutch plate (30) to said impeller housing (42);
a one-way clutch (48) operatively connected to said first end 42A of said impeller housing 42 and said first end of said connecting shaft 34A to prevent said impeller housing (42) from rotating in a direction opposite to the rotational direction of said connecting shaft (34);
an oil pump (14) including a driven gear (20) and a driving gear (16) operatively connected to said first section (12A) of said input shaft (12) with said oil pump (14) enclosed in a housing (22) secured against rotation; and
a clutch connecting plate (82) integrally formed on said second end (38B) of said control shaft (38); and
(B) a speed change system for varying rotational speed/changing rotational direction of the rotational output to said output shaft comprising:
means for receiving rotational input from said input shaft and transmitting a portion thereof to said connecting shaft (34) of said speed change controlling system 10 and to said output shaft; and
means for receiving rotational power from said clutch connecting plate (82) of said speed change controlling system 10, varying the rotational speed/direction thereof and transmitting the varied speed/changed direction rotational power to said output shaft.

2. The continuously variable transmission of claim 1 further comprising a power mode clutch (44) to connect together or release said impeller housing (42) and said connecting shaft (34).

3. The continuously variable transmission of claim 1 wherein said means of said speed change system comprise:
an input sun gear (112) integrally formed on said input shaft between said second section (12B) and said third section (12C);
a reduction sun gear (116) integrally formed at said second end (34B) of said connecting shaft (34) which enables independent rotation about said input shaft;
a carrier (118) rotatably and coaxially mounted on said connecting shaft (34) to enable independent rotation about said connecting shaft (34);
a carrier (124) having an axial bore (124A) formed therein to rotatably receive therein a portion of said third section 12C of said input shaft 12 to enable independent rotation of said carrier (124) about said third section (12C) of said input shaft with said carrier (124) terminating in said output shaft (138);
at least one locking pin (128) secured to and interlinking said carriers (118,124) to enable simultaneous rotation of said carriers;
at least one first planetary gear (130) rotatably mounted on said locking pin (128) and being meshed with said input sun gear (112);
at least one second planetary gear (132) integrally formed with said first planetary gear (130) and being rotatably mounted on said locking pin (128) and being meshed with said reduction sun gear (116);
a forward rotation ring gear (136) rotatably mounted on said connecting shaft (34) and being meshed with said second planetary gear (132);
a reverse rotation input shaft (140) having a first end 146 and a second end 142 rotatably and coaxially mounted on said output shaft (138) to enable independent rotation about said output shaft;
a reverse rotation sun gear (144) integrally formed at said second end (142) of said reverse rotation input shaft (140);
a reverse rotation connecting plate (150) integrally formed at said first end (146) of said reverse rotation input shaft (140);
a reverse rotation carrier (154) rotatably and coaxially mounted on said reverse rotation input shaft (140) between said reverse rotation sun gear (144) and said reverse rotation connecting plate (150) to enable independent rotation about said reverse rotation input shaft:
a reverse rotation carrier (152) rotatably and coaxially mounted on said output shaft (138);
at least one locking pin (156) secured to and interlinking said carriers (152,154) to enable simultaneous rotation of said carriers;
at least one reverse rotation planetary gear (158) rotatably mounted on said locking pin (156) and being meshed with said reverse rotation sun gear (144);
a reverse rotation ring gear (160) integrally formed on said output shaft (138) and being meshed with said reverse rotation planetary gear (158);
a clutch connecting shaft (164) for interlinking said clutch connecting plate (82) and said reverse rotation connecting plate (150);
a forward rotation clutch (166) positioned between said forward rotation ring gear (136) and said clutch connecting shaft (164);
a one-way clutch (170) positioned at the outside of said clutch connecting shaft (164); and
a reverse rotation brake (172) for applying a braking force to said reverse rotation carrier (154).

4. The continuously variable transmission of claim 1 wherein said means of said speed change system comprises:
an input sun gear (112) integrally formed on said input shaft between said second section (12B) and said third section (12C);
a reduction sun gear (116) integrally formed at said second end (34B) of said connecting shaft (34) which enables independent rotation about said input shaft;
a reverse rotation carrier (216) rotatably and coaxially mounted on said connecting shaft (34) to enable independent rotation about said connecting shaft (34);
a reverse rotation carrier (226) rotatably and coaxially mounted on said third section (12C) to enable independent rotation about said third section (12C);
at least one locking pin (228) secured to and interlinking said carriers (216,226) to enable simultaneous rotation of said carriers;
at least one first planetary gear (212) rotatably mounted on said locking pin (228) and being meshed with said input sun gear (112);
at least one second planetary gear (230) integrally formed with said first planetary gear (212) and being rotatably mounted on said locking pin (228) and being meshed with said reduction sun gear (116);
an output ring gear (214) integrally formed with said output shaft (138) and being meshed with said first planetary gear (212);
a reverse rotation brake (222) for applying a braking force to said reverse rotation carrier (216); and
a forward rotation clutch (218) for connecting and disconnecting the power between said clutch connecting plate (82) and said reverse rotation carrier (216).

5. The continuously variable transmission of claim 1 wherein said means of said speed change system comprises:
an input sun gear (112) integrally formed on said input shaft between said second section (12B) and said third section (12C);
a reduction sun gear (116) integrally formed at said second end (34B) of said connecting shaft (34) which enables independent rotation about said input shaft;
a control sun gear shaft (312) rotatably and coaxially mounted on said connecting shaft (34) to enable independent rotation about said connecting shaft;
a control sun gear (316) integrally formed at an end (314) of said control sun gear shaft (312);
a clutch connecting plate (320) integrally formed at another end (318) of said control sun gear shaft (312);
a carrier (332) rotatably and coaxially mounted on said control sun gear shaft (312) to enable independent rotation about said control sun gear shaft;
a carrier (334) rotatably and coaxially mounted on said third section (12C) to enable independent rotation about said third section (12C);
a plurality of locking pins (336,338) secured to and interlinking said carriers (332,334) to enable simultaneous rotation of said carriers;
at least one first differential gear (340) rotatably mounted on said locking pin (336) and being meshed with said input sun gear (112);
at least one third differential gear (342) integrally formed with said first differential gear (340) and being rotatably mounted on said locking pin (336) and being meshed with said reduction sun gear (116);
at least one second differential gear (344) rotatably mounted on said locking pin (338) and being meshed with said third differential gear (342);
at least one fourth differential gear (346) integrally formed with said second differential gear (344) and being rotatably mounted on said locking pin (338) and being meshed with said control sun gear (316);
an output ring gear (356) integrally formed with said output shaft (138) and being meshed with said first differential gear (340);
a forward rotation brake (324) with a one-way clutch (322) for applying a braking force to said clutch connecting plate (320);
a reverse rotation brake (358) for applying a braking force to said carrier (332) ; and
a forward rotation clutch (328) for connecting and disconnecting the power between said clutch connecting plate (82) and said clutch connecting plate (320).

6. The continuously variable transmission of claim 1 wherein said means of said speed change system comprises:
an input sun gear (112) integrally formed on said input shaft between said second section (12B) and said third section (12C);
a reduction sun gear (116) integrally formed at said second end (34B) of said connecting shaft (34) which enables independent rotation about said input shaft;
a control sun gear shaft (412) rotatably and coaxially mounted on said connecting shaft (34) to enable independent rotation about said connecting shaft;
a control sun gear (416) integrally formed at an end (414) of said control sun gear shaft (412);
a clutch connecting plate (420) integrally formed at another end (418) of said control sun gear shaft (412);
a carrier (422) rotatably and coaxially mounted on said control sun gear shaft (412) to enable independent rotation about said control sun gear shaft (412);
a carrier (424) rotatably and coaxially mounted on said third section (12C) to enable independent rotation about said third section (12C) and being integrally formed with said output shaft (138);
a plurality of locking pins (428,430) secured to and interlinking said carriers (422,424) to enable simultaneous rotation of said carriers;
at least one first differential gear (432) rotatably mounted on said locking pin (428) and being meshed with said input sun gear (112);
at least one third differential gear (434) integrally formed with said first differential gear (432) and being rotatably mounted on said locking pin (428) and being meshed with said reduction sun gear (116);
at least one second differential gear (436) rotatably mounted on said locking pin (430) and being meshed with said third differential gear (434);
at least one fourth differential gear (438) integrally formed with said second differential gear (436) and being rotatably mounted on said locking pin (430) and being meshed with said control sun gear (416):
a reverse rotation ring gear (448) rotatably mounted on said control sun gear shaft (412) between said clutch connecting plate (420) and said carrier (422) and being meshed with fourth differential gear (438);
a forward rotation brake (454) with an one-way clutch (458) for applying a braking force to said clutch connecting plate (420);
a reverse rotation brake (450) for applying a braking force to said reverse rotation ring gear (448); and
a forward rotation clutch (460) for connecting and disconnecting the power between said clutch connecting plate (82) and said clutch connecting plate (420).

7. The continuously variable transmission of claim 1 wherein said means of said speed change system comprises:
an input sun gear (112) integrally formed on said input shaft between said second section (12B) and said third section (12C);
a reduction sun gear (116) integrally formed at said second end (34B) of said connecting shaft (34) which enables independent rotation about said input shaft;
a control carrier shaft (512) rotatably and coaxially mounted on said connecting shaft (34) to enable independent rotation about said connecting shaft;
a forward rotation clutch plate (522) integrally formed at an end (520) of said control carrier shaft (512);
a reverse rotation sun gear shaft (524) rotatably and coaxially mounted on said control carrier shaft (512) to enable independent rotation about said control carrier shaft (512);
a reverse rotation sun gear (528) integrally formed at an end (526) of said reverse rotation sun gear shaft (524);
a reverse rotation connecting plate (532) integrally formed at another end (530) of said reverse rotation sun gear shaft (524);
a carrier (534) rotatably and coaxially mounted on said reverse rotation sun gear shaft (524) between said reverse rotation connecting plate (532) and said reverse rotation sun gear (528) to enable independent rotation about said reverse rotation sun gear shaft (524);
a carrier (536) rotatably and coaxially mounted on said third section (12C) to enable independent rotation about said third section (12C) and being integrally formed with said output shaft (138);
at least one locking pin (540) secured to and interlinking said carriers (534,536) to enable simultaneous rotation of said carriers;
at least one first planetary gear (542) rotatably mounted on said locking pin (540) and being meshed with said input sun gear (112);
at least one second planetary gear (544) integrally formed with said first planetary gear (542) and being rotatably mounted said locking pin (540) and being meshed with said reduction sun gear (116);
at least one reverse rotation planetary gear (546) integrally formed with said second planetary gear (544) and being rotatably mounted on said locking pin (540) and being meshed with said reverse rotation sun gear (528);
a control carrier (516) rotatably supporting a neck portion (552) formed between said reverse rotation planetary gear (546) and said second planetary gear (544) and being integrally formed with another end (514) of said control carrier shaft (512);
a reverse rotation brake (560) for applying a braking force to said reverse rotation connecting plate (532); and
a forward rotation clutch (556) for connecting and disconnecting the power between said clutch connecting plate (82) and said forward rotation clutch plate (522).

8. A speed change controlling system for increasing rotational torque in accordance with the load of the output shaft for use with a speed change system for changing rotational output which includes (A) means for receiving rotational input from an input shaft connected to an engine and transmitting a portion thereof to the speed change controlling system and to an output shaft and (B) means for receiving rotational power from the speed change controlling system, varying the speed of the rotational power received or changing the rotational direction and transmitting the varied/changed rotational power to said output shaft; said speed change controlling system comprising:
an input shaft (12) having a first, second and third section (12A,12B,12C) for receiving rotational input;
a connecting shaft (34) having a first end 34A and a second end 34B rotatably and coaxially mounted on said second section (12B) of said input shaft (12) to enable independent rotation about said second section (12B);
a control shaft (38) having a first end 38A and a second end 38B rotatably and coaxially mounted on said connecting shaft (34) to enable independent rotation about said connecting shaft (34);
a fixed shaft (62) rotatably and coaxially mounted on said control shaft (38) to enable independent rotation about said control shaft (38);
an impeller housing (42) having a first end 42A and a second end 42B, with said first end rotatably mounted on said first end of said connecting shaft 34A and said second end including an impeller (56) rotatably mounted on said fixed shaft (62);
a turbine (58) operatively positioned opposite said impeller (56) and secured to said first end (38A) of said control shaft (38);
said impeller housing operatively enclosing said turbine (58), said impeller and said stator and with said housing operatively secured to prevent rotation;
a stator (60) operatively positioned between said impeller (56) and said turbine (58);
a one-way clutch (66) to prevent reverse rotation of said stator (60);
a direct clutch plate (30) integrally formed between said first section (12A) and said second section (12B) of said input shaft 12;
a direct clutch (52) for connecting and disconnecting the rotational input from said direct clutch plate (30) to said impeller housing (42);
a one-way clutch (48) operatively connected to said first end 42A of said impeller housing 42 and said first end of said connecting shaft 34A to prevent said impeller housing (42) from rotating in a direction opposite to the rotational direction of said connecting shaft (34);
an oil pump (14) including a driven gear (20) and a driving gear (16) operatively connected to said first section (12A) of said input shaft (12) with said oil pump (14) enclosed in a housing (22) secured against rotation; and
a clutch connecting plate (82) integrally formed on said second end (38B) of said control shaft (38) and receiving rotational power from said turbine via said clutch connecting plate (82) and transmitting power to said output shaft.

9. The continuously variable transmission of claim 1 further comprising a power mode clutch (44) to connect together or release said impeller housing (42) and said connecting shaft (34).

10. A continuously variable transmission comprising:
a speed change system which receives rotational power generated by an engine through an input shaft, changes the rotational speed/direction and transmits the resulting rotational power to an output shaft, and a speed change controlling system which controls the rotational ratio in accordance with the load of the output shaft and transmits the resulting rotational output to the speed change system, wherein said speed change controlling system comprises:
said input shaft (12) for receiving rotational input;
a connecting shaft (34) rotatably and coaxially mounted on said input shaft to enable independent rotation about said input shaft;
a control shaft (38) rotatably and coaxially mounted on said connecting shaft (34) to enable independent rotation about said connecting shaft (34);
a fixed shaft (62) coaxially mounted on said control shaft (38) with said fixed shaft secured against rotation;
an impeller housing (42) rotatably mounted on said connecting shaft (34);
an impeller (56) rotatably supported on said fixed shaft (62) and integrally formed with said impeller housing (42);
a turbine (58) positioned opposite to said impeller (56) and being integrally formed with said control shaft (38);
a stator (60) operatively positioned between said impeller (56) and said turbine(58);
a one-way clutch (66) to restrain the reverse rotation of said stator (60);
a direct clutch (52) for connecting and disconnecting the power between said impeller housing (42) and said input shaft (12); and
a one-way clutch (48) for preventing said impeller housing (42) from rotating in a direction opposite to the rotational direction of said connecting shaft (34).

11. The continuously variable transmission of claim 10 further comprising a power mode clutch (44) to connect together or release said impeller housing (42) and said connecting shaft (34).

12. The continuously variable transmission of claim 10 wherein said speed change system comprises:
an input sun gear (112) integrally formed on said input shaft;
a reduction sun gear (116) integrally formed with said connecting shaft (34);
at least one first planetary gear (130) meshed with said input sun gear (112);
at least one second planetary gear (132) integrally formed with said first planetary gear (130) and being meshed with said reduction sun gear (116);
carriers (118,124) for rotatably supporting said first and second planetary gears (130,132) and being formed with said output shaft (138);
a forward rotation ring gear (136) meshed with said second planetary gear (132);
a reverse rotation input shaft (140) rotatably and coaxially mounted on said output shaft (138) to enable independent rotation about said output shaft;
a reverse rotation sun gear (144) integrally formed with said reverse rotation input shaft (140);
at least one reverse rotation planetary gear (158) meshed with said reverse rotation sun gear (144);
carriers (152,154) rotatably supporting said reverse rotation planetary gear (158);
a reverse rotation ring gear (160) meshed with said reverse rotation planetary gear (158) and integrally formed on said output shaft (138);
a clutch connecting shaft (164) for operatively connecting said control shaft (38) and said reverse rotation input shaft (140);
a forward rotation clutch (166) for connecting and disconnecting the power between said forward rotation ring gear (136) and said clutch connecting shaft (164);
a one-way clutch (170) positioned at the outside of said clutch connecting shaft (164); and
a reverse rotation brake (172) for applying a braking force to said reverse rotation carriers (152,154).

13. The continuously variable transmission of claim 10 wherein said speed change system comprises:
an input sun gear (112) integrally formed on said input shaft;
a reduction sun gear (116) integrally formed with said connecting shaft (34);
at least one first planetary gear (212) meshed with said input sun gear (112);
at least one second planetary gear (230) integrally formed with said first planetary gear (212) and meshed with said reduction sun gear (116);
carriers (216,226) for rotatably supporting said first and second planetary gear (212,230);
an output ring gear (214) meshed with said first planetary gear (212) and integrally formed with said output shaft (138);
a reverse rotation brake (222) for applying a braking force to said reverse rotation carrier (216); and
a forward rotation clutch (218) for connecting and disconnecting the power between said control shaft (38) and said reverse rotation carrier (216).

14. The continuously variable transmission of claim 10 wherein said speed change system comprises:
an input sun gear (112) integrally formed on said input shaft;
a reduction sun gear (116) integrally formed with said connecting shaft (34);
a control sun gear shaft (312) rotatably and coaxially mounted on said connecting shaft (34) to enable independent rotation about said connecting shaft;
a control sun gear (316) integrally formed with said control sun gear shaft (312);
at least one first differential gear (340) meshed with said input sun gear (112);
at least one third differential gear (342) integrally formed with said first differential gear (340) and being meshed with said reduction sun gear (116);
at least one second differential gear (344) meshed with said third differential gear (342);
at least one fourth differential gear (346) integrally formed with said second differential gear (344) and being meshed with said control sun gear (316);
carriers (332,334) for rotatably supporting said first differential gear (340), third differential gear (342), second differential gear (344) and fourth differential gear (346);
an output ring gear (356) meshed with said first differential gear (340) and integrally formed on said output shaft (138);
a forward rotation brake (324) with a one-way clutch (322) for applying a braking force to said control sun gear shaft (312);
a reverse rotation brake (358) for applying a braking force to said carrier (332,334); and
a forward rotation clutch (328) for connecting and disconnecting the power between said control shaft (38) and said control sun gear shaft (312).

15. The continuously variable transmission of claim 10 wherein said speed change system comprises:
an input sun gear (112) integrally formed on said input shaft;
a reduction sun gear (116) integrally formed with said connecting shaft (34);
a control sun gear shaft (412) rotatably and coaxially mounted on said connecting shaft (34) to enable independent rotation about said connecting shaft;
a control sun gear (416) integrally formed with said control sun gear shaft (412);
at least one first differential gear (432) meshed with said input sun gear (112);
at least one third differential gear (434) integrally formed with said first differential gear (432) and being meshed with said reduction sun gear (116);
at least one second differential gear (436) meshed with said third differential gear (434);
at least one fourth differential gear (438) integrally formed with said second differential gear (436) and being meshed with said control sun gear (416);
carriers (422,424) for rotatably supporting said first differential gear (432), third differential gear (434), second differential gear (436), and fourth differential gear (438) and being integrally formed with said output shaft (138);
a reverse rotation ring gear (448) meshed with said fourth differential gear (438);
a forward rotation brake (454) with a one-way clutch (458) for applying a braking force to said control sun gear shaft (412);
a reverse rotation brake (450) for applying a braking force to said reverse rotation ring gear (448); and
a forward rotation clutch (460) for connecting and disconnecting the power between said control shaft (38) and said control sun gear shaft (412).

16. The continuously variable transmission of claim 10 wherein said speed change system comprises:
an input sun gear (112) integrally formed on said input shaft;
a reduction sun gear (116) integrally formed with said connecting shaft (34);
a control carrier shaft (512) rotatably and coaxially mounted on said connecting shaft (34) to enable independent rotation about said connecting shaft;
a reverse rotation sun gear shaft (524) rotatably and coaxially mounted on said control carrier shaft (512) to enable independent rotation about said control carrier shaft (512);
a reverse rotation sun gear (528) integrally formed with said reverse rotation sun gear shaft (524);
at least one first planetary gear (542) meshed with said input sun gear (112);
at least one second planetary gear (544) integrally formed with said first planetary gear (542) and being meshed with said reduction sun gear (116); at least one reverse rotation planetary gear (546) integrally
formed with said second planetary gear and being meshed with said reverse rotation sun gear (528);
carriers (534,536) for rotatably supporting said first planetary gear (542), second planetary gear (544) and third planetary gear (546) and being integrally formed with said output shaft (138);
a control carrier (516) integrally formed with said control carrier shaft (512) and rotatably supporting a portion between said reverse planetary gear (546) and second planetary gear (544);
a reverse rotation brake (560) for applying a braking force to said reverse rotation sun gear shaft (524); and
a forward rotation clutch (556) for connecting and disconnecting the power between said control shaft (38) and said control carrier shaft (512).

17. A speed change controlling system comprises:
an input shaft (12) for receiving rotational input;
a connecting shaft (34) rotatably and coaxially mounted on said input shaft to enable independent rotation about said input shaft;
a control shaft (38) rotatably and coaxially mounted on said connecting shaft (34) to enable independent rotation about said connecting shaft (34);
a fixed shaft (62) coaxially mounted on said control shaft (38) with said fixed shaft secured against rotation;
an impeller housing (42) rotatably mounted on said connecting shaft (34);
an impeller (56) rotatably supported on said fixed shaft (62) and integrally formed with said impeller housing (42);
a turbine (58) positioned opposite to said impeller (56) and being integrally formed with said control shaft (38);
a stator (60) operatively positioned between said impeller (56) and said turbine(58);
a one-way clutch (66) to restrain the reverse rotation of said stator (60);
a direct clutch (52) for connecting and disconnecting the power between said impeller housing (42) and said input shaft (12); and
a one-way clutch (48) for preventing said impeller housing (42) from rotating in a direction opposite to the rotational direction of said connecting shaft (34).

18. The speed change controlling system of claim 17 further comprising a power mode clutch (44) for connecting and disconnecting the power between said impeller housing (42) and said connecting shaft (34).
